(19) Europäisches Patentamt
European Patent Office
Office européen des brevets

(11) **EP 2 223 038 B1**

(12) **EUROPÄISCHE PATENTSCHRIFT**

(45) Veröffentlichungstag und Bekanntmachung des Hinweises auf die Patenterteilung:
**14.12.2016 Patentblatt 2016/50**

(21) Anmeldenummer: **08802747.9**

(22) Anmeldetag: **01.10.2008**

(51) Int Cl.:
*G01N 21/3504* (2014.01)    *G01N 21/3554* (2014.01)
*G01B 9/02* (2006.01)

(86) Internationale Anmeldenummer:
**PCT/EP2008/008341**

(87) Internationale Veröffentlichungsnummer:
**WO 2009/065463 (28.05.2009 Gazette 2009/22)**

(54) **INTERFEROMETERANORDNUNG UND VERFAHREN ZU DEREN BETRIEB**

INTERFEROMETER ARRANGEMENT AND METHOD FOR THE OPERATION THEREOF

DISPOSITIF D'INTERFÉROMÉTRIE ET PROCÉDÉ POUR LE FAIRE FONCTIONNER

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.11.2007 DE 102007055665**

(43) Veröffentlichungstag der Anmeldung:
**01.09.2010 Patentblatt 2010/35**

(73) Patentinhaber: **Dr. Johannes Heidenhain GmbH 83301 Traunreut (DE)**

(72) Erfinder: **HOLZAPFEL, Wolfgang 83119 Obing (DE)**

(56) Entgegenhaltungen:
**US-A- 3 734 623     US-A- 5 674 362**

• **BOENSCH G ET AL: "MEASUREMENT OF THE REFRACTIVE INDEX OF AIR AND COMPARISON WITH MODIFIED EDLEN'S FORMULAE" METROLOGIA, INSTITUTE OF PHYSICS PUBLISHING, BRISTOL, GB, Bd. 35, 1. Januar 1998 (1998-01-01), Seiten 133-139, XP001152403 ISSN: 0026-1394**

**Beschreibung**

Bei Längenmessungen mittels Interferometern dient als Messnormal bzw. Maßverkörperung die Wellenlänge der verwendeten Laserstrahlung in Luft. Diese sei nachfolgend als Lichtwellenlänge bezeichnet. Die Lichtwellenlänge ist von bestimmten Umgebungsparametern abhängig, wie etwa von der Temperatur, dem Druck, der Feuchtigkeit und der konkreten Gaszusammensetzung. Für eine korrekte Längenmessung ist daher die Kenntnis der korrekten Lichtwellenlänge bzw. eine Kompensation von Umwelteinflüssen während der Messung nötig.

Laserinterferometer, deren Mess- und/oder Referenzstrecken in Luft verlaufen, unterliegen daher erheblichen Messschwankungen, die durch lokale Brechungsindexschwankungen der Luft verursacht werden. Die Stabilität, Reproduzierbarkeit und Genauigkeit solcher Laserinterferometer ist dadurch auf $1 \cdot 10^{-6}$ (Werkstattbedingungen) bis $1 \cdot 10^{-7}$ (gute Laborbedingungen) relativ zur Messstrecke beschränkt. Da die stärksten Schwankungen im Frequenzbereich 0-10 Hz liegen, beeinträchtigen sie auch Messungen, die in relativ kurzer Zeit durchgeführt werden. Heutige Anforderungen an die Stabilität und Reproduzierbarkeit von Längenmessungen in der Elektronik- und Halbleiterindustrie können damit nicht mehr erfüllt werden. Sie liegen typisch im Bereich $1 \cdot 10^{-8}$ bis $1 \cdot 10^{-9}$ (d.h. 0.2nm bis 2nm bei einer mittleren Messstrecke von 20cm) über Zeitintervalle von wenigen Minuten.

Zur Erfassung und Kompensation derartiger Brechungsindexschwankungen in Luft sind bislang schon eine Reihe von Lösungsansätzen bekannt geworden.

In einer ersten Variante werden die verschiedenen Umgebungsparameter wie Lufttemperatur, Luftdruck und Luftfeuchtigkeit mittels geeigneter Sensoren erfasst und über die sog. Edlen-Formel eine korrigierte bzw. effektive Lichtwellenlänge bestimmt. Beschrieben ist ein derartiges Verfahren etwa in der Dissertation von Jens Flügge, Vergleichende Untersuchungen zur messtechnischen Leistungsfähigkeit von Laserinterferometern und inkrementellen Maßstabsmesssystemen, RWTH Aachen (D82), Februar 1996, ISBN 3-89429-683-6, S. 13-14. Nachteilig an diesem Vorgehen ist, dass die verschiedenen Parameter bzgl. der Umgebungsbedingungen lediglich an diskreten Punkten sowie nur in der Nähe der optischen Messachse bestimmt werden. Der genaue Verlauf dieser Parameter entlang der Messachse wird daher nur angenähert erfasst, woraus wiederum Ungenauigkeiten bei der Bestimmung der effektiven Lichtwellenlänge und damit bei der eigentlichen Längenmessung resultieren. Hinzu kommt, dass die verschiedenen Sensoren in der Regel signifikante Ansprechzeiten aufweisen, so dass ggf. auftretende kurzzeitige Schwankungen der Parameter entlang der Messachse ebenfalls nicht korrekt erfassbar sind. Aufgrund dieser Unzulänglichkeiten ist die Genauigkeit dieser Variante zur Erfassung und Kompensation von Brechungsindexschwankungen bei interferometrischen Längenmessungen in Luft als begrenzt anzusehen.

Eine zweite Variante sieht vor, die Luftwellenlänge mittels eines Refraktometers zu bestimmen. Beschrieben ist auch ein derartiges Verfahren in der bereits oben erwähnten Dissertation von Jens Flügge, Vergleichende Untersuchungen zur messtechnischen Leistungsfähigkeit von Laserinterferometern und inkrementellen Maßstabsmesssystemen, RWTH Aachen (D82), Februar 1996, ISBN 3-89429-683-6, S. 15-16. Es ergeben sich hierbei die prinzipiell gleichen Probleme wie bei der ersten Variante; zudem ist dieses Vorgehen als relativ aufwändig und damit teuer einzustufen.

Eine dritte Variante zur Korrektur der Lichtwellenlänge in interferometrischen Messverfahren ist schließlich aus der US 6,501,550 bekannt geworden, die hierzu eine akusto-optische Interferometeranordnung vorsieht. Mit Hilfe eines Schallsenders und eines Schallempfängers wird die Schall-Laufzeit entlang der Messachse ermittelt und die Schallgeschwindigkeit bestimmt, indem die gemessene Schall-Laufzeit mit der über die optische Interferometer-Messung bekannte Position verknüpft wird. Da die Schallgeschwindigkeit wiederum in bekannter Art und Weise von den herrschenden Umgebungsbedingungen abhängt, lässt sich über eine entsprechende Korrekturfunktion eine aktuelle mittlere Lufttemperatur entlang der Messachse bestimmen. Die derart bestimmte Lufttemperatur dient dann wiederum als Eingangsgröße für das bereits eingangs beschriebene Verfahren zur Bestimmung der mittleren Lichtwellenlänge mittels der Edlen-Formel etc.. Als Vorteil dieses Verfahrens ist anzuführen, dass als in die Korrektur eingehende Messgröße die entlang der Messachse gemittelte Schallgeschwindigkeit verwendet wird. Damit können eventuelle Schwankungen der Temperatur entlang der Messachse ebenfalls kompensiert werden. Nachteilig hierbei ist jedoch, dass aufgrund der wesentlich größeren Wellenlänge der Schallwelle (2-5mm) und der damit verbundenen stärkeren Beugungseffekte die transversale Ausdehnung der Schallwelle 20 - 100 mal größer ist als die der Lichtwelle. Daraus resultieren zwei entscheidende Nachteile dieses Verfahrens: Zum einen führen kaum zu vermeidende Schallreflexionen und - ablenkungen an benachbarten Maschinenteilen zu Störsignalen, die das Messergebnis der Ultraschallmessung verfälschen. Zum anderen erfasst die Ultraschallwelle ein deutlich größeres Luftvolumen um die Messachse herum, so dass Lufttemperaturschwankungen außerhalb der Lichtwelle des Interferometers ebenfalls Messfehler zur Folge haben.

In einer vierten Variante schließlich, nachfolgend als Mehrwellenlängen-Interferometrie bezeichnet, lässt sich durch die Verwendung mehrerer Wellenlängen eine Korrektur der Vakuumwellenlänge vornehmen. Hierzu wird das Dispersionsverhalten von Luft zur Korrektur verwendet. Beispielsweise sei zu derartigen Verfahren auf die US 5,404,222 oder auf die US 5,764,362 verwiesen, die entsprechende Vorgehensweisen im Detail offenbaren. Als nachteilig an der vierten Variante umweltkompensierter, interferometrischer Messverfahren ist der relativ große resultierende Aufwand für die nötige optische Frequenzvervielfachung der hochgenauen Laser-Lichtquelle anzusehen. Ferner ist stets eine erhebliche Messunsicherheit bei der erforderlichen Bestimmung des Dispersionsverhaltens von Luft zu berücksichtigen, da der ausgenutzte Dispersionseffekt sehr gering ist. Die Messschwankungen können über dieses Verfahren deshalb nur geringfügig verringert werden.

Aufgabe der vorliegenden Erfindung ist es, eine Interferometeranordnung sowie ein Verfahren zu dessen Betrieb anzugeben, über die eine verbesserte Messgenauigkeit sichergestellt wird. Insbesondere sollen hierbei eventuelle Brechungsindexschwankungen in Luft ohne großen Aufwand möglichst präzise erfasst werden.

Die erste Teilaufgabe wird erfindungsgemäß durch eine Interferometeranordnung mit den Merkmalen des Anspruchs 1 gelöst.

Vorteilhafte Ausführungen der erfindungsgemäßen Interferometeranordnung ergeben sich aus den Maßnahmen in den von Anspruch 1 abhängigen Ansprüchen.

Erfindungsgemäß ist nunmehr vorgesehen, die Fluktuationen des mittleren Brechungsindex der Luft im Mess- und/oder Referenzarm über ein spektroskopisches Verfahren zu ermitteln. Hierbei wird die Absorption eines Luftbestandteils entlang der Mess- und/oder Referenzstrecke der Interferometeranordnung mittels geeigneter Erfassungsmittel messtechnisch bestimmt, die aufgrund der homogenen Luftzusammensetzung ein indirektes Maß für die Dichte oder die mittlere Temperatur der jeweiligen Luftsäule darstellt. Die erfassten Luftsäulen stimmen dabei mit den Luftsäulen der Interferometeranordnung überein. Der über andere Erfassungsmittel erfasste mittlere Brechungsindex lässt sich durch die Messwerte bzgl. der Absorption in kurzen Zeitabständen geeignet korrigieren. Auf diese Art und Weise können somit Fluktuationen des mittleren Brechungsindex der Luftsäule ausgeglichen werden, die hauptsächlich von lokalen Temperaturschwankungen hervorgerufen werden. Die Messgenauigkeit der erfindungsgemäßen Interferometeranordnung lässt sich gegenüber den Methoden aus dem Stand der Technik nennenswert steigern.

Die erfindungsgemäße Interferometeranordnung umfasst ein Interferometer mit einer Interferometer-Lichtquelle, deren emittierte Strahlung in einen Mess- und einen Referenzarm aufteilbar ist, wobei ein Messobjekt im Messarm angeordnet ist und das Interferometer von der Position des Messobjekts abhängige Interferometersignale liefert. Ferner umfasst die Interferometeranordnung Erfassungsmittel zur Erfassung von Fluktuationen des Brechungsindexes der Luft im Mess- und/oder Referenzarm. Die Erfassungsmittel umfassen wiederum eine Spektrometereinheit, wobei die Spektrometereinheit mindestens eine Spektrometer-Lichtquelle und eine Spektrometer-Detektoreinheit aufweisen. Den von der eine Spektrometer-Lichtquelle emittierten Strahlenbündeln sind die Strahlenbündel der Interferometer-Lichtquelle überlagert; die Spektrometer-Lichtquelle emittiert Strahlung mit einer Wellenlänge, die im Bereich einer Absorptionslinie mindestens eines bestimmten Luftbestandteils liegt. Über die Spektrometer-Detektoreinheit werden Spektrometersignale erzeugt, die die Absorption des Luftbestandteils bzgl. der Spektrometer-Lichtquellenwellenlänge im Mess- und/oder Referenzarm charakterisieren.

Mit Vorteil umfassen die Erfassungsmittel ferner Brechungsindex-Bestimmungsmittel, die zur Bestimmung des nominellen Brechungsindexes $n(T_0, p_0, RH_0)$ der Luft im Bereich des Mess- und/oder Referenzarms dienen.

In einer möglichen Variante ist eine erste Prozessoreinheit vorgesehen, an der eingangsseitig die Spektrometersignale der Spektrometereinheit anliegen, wobei die Prozessoreinheit dazu ausgebildet ist, aus den anliegenden Spektrometersignalen die Fluktuationen des Brechungsindexes der Luft im Mess- und/oder Referenzarm zu bestimmen und entsprechende Ausgangssignale der ersten Prozessoreinheit zur Weiterverarbeitung bereitzustellen.

Hierbei ist es möglich, dass an der ersten Prozessoreinheit zusätzlich die Ausgangssignale der Brechungsindex-Bestimmungsmittel anliegen und die erste Prozessoreinheit dazu ausgebildet ist, aus den anliegenden Signalen den mittleren Brechungsindex im Bereich des Mess- und/oder Referenzarms zu bestimmen und entsprechende Ausgangssignale der ersten Prozessoreinheit zur Weiterverarbeitung bereitzustellen.

Ferner ist es möglich, eine Korrektureinheit vorzusehen, an der eingangsseitig die Ausgangssignale der ersten Prozessoreinheit bzgl. des Brechungsindexes im Mess- und/oder Referenzarm sowie die Ausgangssignale einer zweiten Prozessoreinheit bzgl. der optischen Weglängendifferenz anliegen, die aus den anliegenden Interferometersignalen von der zweiten Prozessoreinheit bestimmt wird, wobei die Korrektureinheit dazu ausgebildet ist, aus den Ausgangssignalen der ersten Prozessoreinheit bzgl. des Brechungsindex im Mess- und/oder Referenzarm einen effektiven Brechungsindex zu bestimmen und diesen in Verbindung mit der optischen Weglängendifferenz zu verarbeiten und ausgangsseitig korrigierte Positionssignale bzgl. der Position des Messobjekts im Messarm bereitzustellen.

Beispielsweise kann die erste Prozessoreinheit dazu ausgebildet sein, die Wellenlänge der Spektrometer-Lichtquelle im Bereich mindestens einer Absorptionslinie mindestens eines Luftbestandteils durchzustimmen, dessen Absorptionscharakteristik bestimmt wird.

Alternativ kann aber auch die erste Prozessoreinheit dazu ausgebildet sein, ein Fabry-Perot-Interferometer im Bereich mindestens einer Absorptionslinie mindestens eines Luftbestandteils durchzustimmen, dessen Absorptionscharakteristik bestimmt wird, wobei das Fabry-Perot-Interferometer auf Seiten der Spektrometer-Detektoreinheit angeordnet ist.

Hierbei kann die erste Prozessoreinheit dazu ausgebildet sein, eine Mitten-Wellenlänge des Durchstimmbereichs der Spektrometer-Lichtquelle so zu regeln oder das Fabry-Perot-Interferometer so durchzustimmen, dass sie in einem festen Abstand zum Absorptionsmaximum desjenigen Luftbestandteils steht, dessen Absorptionscharakteristik bestimmt wird.

Es ist etwa auch möglich, dass das Interferometer und die Spektrometereinheit eine gemeinsame Lichtquelle aufweisen.

Im Strahlengang der Spektrometereinheit können optische Elemente angeordnet sein, die das Strahlenbündel der Spektrometer-Lichtquelle mehrfach entlang des Mess- und/oder Referenzarms des Interferometers lenken.

Die erste Prozessoreinheit kann dazu ausgebildet sein, die Wellenlänge der Spektrometer-Lichtquelle im Durchstimmbereich periodisch durchzustimmen, wobei die Durchstimmperiode zeitlich kürzer als eine typische Fluktuation des Brechungsindexes im Mess- und/oder Referenzarm ist.

Vorzugsweise liegt die Wellenlänge der Spektrometer-Lichtquelle im Bereich mindestens einer Absorptionslinie mindestens einer der nachfolgenden Luftbestandteile: $N_2$, $O_2$, $CO_2$, $H_2O$.

Mit Vorteil liegt hierbei die Wellenlänge der Spektrometer-Lichtquelle mindestens im Bereich einer Absorptionslinie von Wasser und eines weiteren Luftbestandteils.

Es ist ferner möglich, dass eine Erfassung mehrerer Absorptionslinien mit stark unterschiedlichen Temperaturkoeffizienten der Absorption erfolgt.

In einer möglichen Variante ist die spektrale Breite der Spektrometer-Lichtquelle kleiner oder vergleichbar mit der spektralen Breite der Absorptionslinie.

Mit Vorteil bildet die erste Prozessoreinheit aus den eingangsseitig anliegenden Spektrometersignalen Absorptionsdifferenzwerte aus der Absorption im Zentrum der Absorptionslinie und der Absorption im Außenbereich der Absorptionslinie, die dann zur Bestimmung des Brechungsindex verwendbar sind.

Desweiteren ist es möglich, dass die erste Prozessoreinheit aus den eingangsseitig anliegenden Spektrometersignalen die spektrale Breite der Absorptionslinie bestimmt.

Das Interferometer weist z.B. eine Interferometer-Detektoreinheit mit mehreren Interferometer-Detektorelementen zur Erzeugung mehrerer Positionssignale zu verschiedenen Messpunkten des mindestens einen Messobjekts auf und auch die Spektrometer-Detektoreinheit umfasst mehrere Spektrometer-Detektorelemente zur Erfassung der Absorption des Luftbestandteils in den zugehörigen Mess- und/oder Referenzarmen umfasst.

Hierbei können die Interferometer-Detektorelemente und die Spektrometer-Detektorelemente jeweils als Detektorarray ausgebildet sein.

Es ist zudem möglich, dass das Interferometer als Michelson-Interferometer oder als Fabry-Perot-Interferometer oder als Fizeau-Interferometer oder als Twyman-Green-Interferometer oder als Speckle-Interferometer ausgebildet ist.

Beispielsweise kann die Spektrometer-Detektoreinheit ferner ein durchstimmbares Fabry-Perot-Interferometer enthalten.

Die Spektrometer-Lichtquelle kann bevorzugterweise als DFB-Laser oder als External-Cavity-Laser ausgebildet sein.

Die Brechungsindex-Bestimmungsmittel können ein oder mehrere Sensoren zur Bestimmung von Luftparametern und/oder ein Referenzinterferometer mit bekannter Messstrecke zur Bestimmung eines mittleren Brechungsindexes der Luft im Mess- und/oder Referenzarm umfassen.

Im Rahmen des erfindungsgemäßen Verfahren zum Betrieb einer Interferometeranordnung, umfasst letztere ein Interferometer mit einer Interferometer-Lichtquelle, deren emittierte Strahlung in einen Mess- und in einen Referenzarm aufgeteilt wird, wobei ein Messobjekt im Messarm angeordnet ist und das Interferometer von der Position des Messobjekts abhängige Interferometersignale liefert. Ferner werden über Erfassungsmittel die Fluktuationen des Brechungsindexes der Luft im Mess- und/oder Referenzarm erfasst. Hierbei umfassen die Erfassungsmittel eine Spektrometereinheit, wobei von einer Spektrometer-Lichtquelle Strahlung mit einer Wellenlänge emittiert wird, die im Bereich einer Absorptionslinie mindestens eines Luftbestandteils liegt und die von der Spektrometer-Lichtquelle emittierte Strahlenbündel den Strahlenbündeln der Interferometer-Lichtquelle überlagert werden. Über mindestens eine Spektrometer-Detektoreinheit werden Spektrometersignale erzeugt, die die Absorption des Luftbestandteils bzgl. der Spektrometer-Lichtquellenwellenlänge im Mess- und/oder Referenzarm charakterisieren.

Ferner können die Erfassungsmittel Brechungsindex-Bestimmungsmittel umfassen, über die der nominelle Brechungsindex $n(T_0, p_0, RH_0)$ der Luft im Bereich des Mess- und/oder Referenzarms bestimmt wird.

Hierbei können aus den Spektrometersignalen die Fluktuationen des Brechungsindexes der Luft im Mess- und/oder Referenzarm bestimmt und entsprechende Signale zur Weiterverarbeitung bereitgestellt werden.

Beispielsweise kann der mittlere Brechungsindex im Bereich des Mess- und/oder Referenzarms bestimmt und entsprechende Signale zur Weiterverarbeitung bereitgestellt werden.

Es ist möglich, aus Signalen bzgl. des Brechungsindexes im Mess- und/oder Referenzarm einen effektiven Brechungsindex zu bestimmen und diesen in Verbindung mit der aus den Interferometersignalen bestimmten optischen Weglängendifferenz zu verarbeiten und korrigierte Positionssignale bzgl. der Position des Messobjekts im Messarm zur Weiterverarbeitung bereitzustellen.

Hierbei kann die Wellenlänge der Spektrometer-Lichtquelle im Bereich mindestens einer Absorptionslinie mindestens eines Luftbestandteils durchgestimmt werden, dessen Absorptions- oder Dispersionscharakteristik bestimmt wird.

Es könnte ferner ein Fabry-Perot-Interferometer im Bereich mindestens einer Absorptionslinie mindestens eines Luftbestandteils durchgestimmt werden, dessen Absorptions- oder Dispersionscharakteristik bestimmt wird, wobei das Fabry-Perot-Interferometer auf Seiten der Spektrometer-Detektoreinheit angeordnet ist.

Es ist etwa auch möglich, dass die Mitten-Wellenlänge des Durchstimmbereichs der Spektrometer-Lichtquelle so geregelt wird, dass sie in einem festen Abstand zum Absorptionsmaximum des Luftbestandteils steht, dessen Absorptions- oder Dispersionscharakteristik bestimmt wird.

Es ist zudem möglich, dass die Wellenlänge der Spektrometer-Lichtquelle im Durchstimmbereich periodisch durchgestimmt wird, wobei die Durchstimmperiode zeitlich kürzer als eine typische Fluktuation des Brechungsindex im Mess- und/oder Referenzarm ist.

Es können etwa aus den Spektrometersignalen Absorptionsdifferenzwerte aus der Absorption im Zentrum der Absorptionslinie und der Absorption im Außenbereich der Absorptionslinie gebildet werden, die dann zur Bestimmung des Brechungsindex verwendet werden.

Desweiteren kann aus den Spektrometersignalen die spektrale Breite der Absorptionslinie bestimmt werden.

Weitere Einzelheiten und Vorteile der vorliegenden Erfindung seien anhand der nachfolgenden Beschreibung von Ausführungsbeispielen in Verbindung mit den Figuren erläutert.

Es zeigt

Figur 1      eine Darstellung der Absorptions- und Dispersionscharakteristik im Bereich einer Absorptionslinie;

Figur 2a      eine schematische Darstellung einer ersten Ausführungsform der erfindungsgemäßen Interferometeranordnung;

Figur 2b      eine schematische Darstellung zur Erläuterung der Signalverarbeitung der erfindungsgemäßen Interferometeranordnung aus Fig. 2a;

Figur 3a      eine schematische Darstellung einer zweiten Ausführungsform der erfindungsgemäßen Interferometeranordnung;

Figur 3b      eine schematische Darstellung zur Erläuterung der Signalverarbeitung der erfindungsgemäßen Interferometeranordnung aus Fig. 3a;

Figur 4      eine schematische Darstellung einer dritten Ausführungsform der erfindungsgemäßen Interferometeranordnung;

Figur 5      eine schematische Darstellung einer vierten Ausführungsform der erfindungsgemäßen Interferometeranordnung;

Figur 6      eine schematische Darstellung einer fünften Ausführungsform der erfindungsgemäßen Interferometeranordnung;

Figur 7      eine schematische Darstellung einer sechsten Ausführungsform der erfindungsgemäßen Interferometeranordnung.

Bevor anhand der verschiedenen Zeichnungen eine Beschreibung konkreter Ausführungsformen der erfindungsgemäßen Interferometeranordnung erfolgt, seien nachfolgend zunächst die maßgeblichen theoretischen Grundlagen der vorliegenden Erfindung erläutert.

Theoretische Grundlagen

Bekannte Interferometer messen die optische Weglängendifferenz OPD zwischen einer Messstrecke MS und einer Referenzstrecke RS. Dabei durchläuft der Strahl einer Laser-Lichtquelle die Messstrecke MS entlang des Messstrahlweges MSW und die Referenzstrecke RS entlang des Referenzstrahlweges RSW. Es werden hierbei nur Luftwege berücksichtigt, da üblicherweise die zusätzlichen Weglängen in optischen Bauteilen wie z.B. Strahlteiler und Tripelprismen im Mess- und Referenzstrahlweg gleich lang und damit kompensiert sind. Es gilt daher:

$$OPD = \int\limits_{MSW} n(x)dl - \int\limits_{RSW} n(x)dl \qquad \text{(Gl. 1)}$$

Das Interferometer soll am Ausgang eine Messgröße bzw. ein Maß für die geometrische Weglängendifferenz $GPD = L_{MSW} - L_{RSW}$ zwischen der Länge $L_{MSW}$ des Messstrahlwegs MSW und der Länge $L_{RSW}$ des Referenzstrahlwegs RSW ausgeben. Um von der optischen Weglängendifferenz OPD auf die geometrische Weglängendifferenz GPD schließen zu können, muss deshalb ein Korrekturfaktor $1/n_{eff}$ bestimmt werden mit:

$$GPD = OPD / n_{eff} \qquad (Gl.\ 2)$$

Der effektive Brechungsindex $n_{eff}$ kann aus den mittleren Brechungsindizes $n_M$ und $n_R$ entlang der Strahlwege MSW bzw. RSW bestimmt werden:

$$n_{eff} = \frac{OPD}{GPD} = n_M \cdot \frac{1}{1 - L_{RSW}/L_{MSW}} + n_R \cdot \frac{1}{1 - L_{MSW}/L_{RSW}} \qquad (Gl.\ 3)$$

mit

$$n_M = \frac{1}{L_{MSW}} \int_{MSW} n(x)dl$$
$$n_R = \frac{1}{L_{RSW}} \int_{RSW} n(x)dl \qquad (Gl.\ 4)$$

In Gl. 3 und 4 genügt es, Schätzwerte für $L_{MSW}$ und $L_{RSW}$ einzusetzen, beispielsweise können etwa die unkorrigierten oder zuletzt gemessenen Längenwerte verwendet werden.

Der lokale Brechungsindex n(x) von Luft hängt von den lokalen Parametern Lufttemperatur T(x), Luftdruck p(x) und relative Luftfeuchte RH(x) ab. Um einen Arbeitspunkt $T_0$, $p_0$, $RH_0$ herum kann diese Abhängigkeit linearisiert werden:

$$n(x) = n(T_0, p_0, RH_0) + \frac{\partial n}{\partial T}\bigg|_{T=T_0} \cdot (T(x) - T_0) + \frac{\partial n}{\partial p}\bigg|_{p=p_0} \cdot (p(x) - p_0)$$

$$+ \frac{\partial n}{\partial RH}\bigg|_{RH=RH_0} \cdot (RH(x) - RH_0)$$

$$= n(T_0, p_0, RH_0) + \eta_T \cdot \Delta T(x) + \eta_p \cdot \Delta p(x) + \eta_{RH} \cdot \Delta RH(x)$$

$$(Gl.\ 5)$$

mit

$$\eta_T = \frac{\partial n}{\partial T}\bigg|_{T=T_0} \qquad \Delta T(x) = T(x) - T_0$$

$$\eta_p = \frac{\partial n}{\partial p}\bigg|_{p=p_0} \qquad \Delta p(x) = p(x) - p_0 \qquad (Gl.\ 6)$$

$$\eta_{RH} = \frac{\partial n}{\partial RH}\bigg|_{RH=RH_0} \qquad \Delta RH(x) = RH(x) - RH_0$$

Dabei sind die Faktoren $\eta_T$, $\eta_p$ und $\eta_{RH}$ in der Regel geringfügig von der Luftzusammensetzung abhängig.

Der nominelle Brechungsindex $n(T_0, p_0, RH_0)$ am Arbeitspunkt $T_0$, $p_0$, $RH_0$ kann durch die bekannte Edlen-Formel bestimmt werden, wenn der Arbeitspunkt durch entsprechende Messwerte von vorgesehenen Umweltsensoren definiert wird. Abweichungen der lokalen Luftparameter $\Delta T(x)$, $\Delta p(x)$ und $\Delta RH(x)$ entlang der Strahlwege MSW und RSW führen zu Fluktuationen der mittleren Brechungsindizes $n_M$ und $n_R$ um den nominellen Wert $n(T_0, p_0, RH_0)$. Dabei sind in der Praxis hauptsächlich die lokalen Temperaturschwankungen $\Delta T(x)$ relevant. Durch den schnellen Druckausgleich in Luft sind die Druckschwankungen homogen über das Messvolumen verteilt. Der abseits der Strahlwege MSW und RSW gemessene Luftdruck $p_0$ stimmt daher weitgehend mit dem Luftdruck $p(x)$ entlang der Strahlwege überein. Analoges gilt auch für die relative Luftfeuchte RH. Es kann mit hoher Genauigkeit angesetzt werden:

$$\begin{aligned} \Delta p(x) &\approx 0 \\ \Delta RH(x) &\approx 0 \end{aligned} \quad \text{bzw.} \quad \begin{aligned} p(x) &\approx p_0 \\ RH(x) &\approx RH_0 \end{aligned} \qquad \text{(Gl. 7)}$$

Die einzige Ortsabhängigkeit des Brechungsindex entsteht daher durch den lokalen Temperatureinfluss. Dies gilt auch für andere Parameter, die von der Luft beeinflusst werden. Gl. 5 reduziert sich damit auf:

$$n(x) = n(T_0, p_0, RH_0) + \eta_T \cdot \Delta T(x) \qquad \text{(Gl. 8)}$$

und liefert mit Gl. 4:

$$n_M = n(T_0, p_0, RH_0) + \frac{\eta_T}{L_{MSW}} \int\limits_{MSW} \Delta T(x) dl = n(T_0, p_0, RH_0) + \eta_T \cdot \Delta T_{MSW}$$

$$n_R = n(T_0, p_0, RH_0) + \frac{\eta_T}{L_{RSW}} \int\limits_{RSW} \Delta T(x) dl = n(T_0, p_0, RH_0) + \eta_T \cdot \Delta T_{RSW}$$

$$\text{(Gl. 9)}$$

Die mittleren Temperaturabweichungen $\Delta T_{MSW}$ und $\Delta T_{RSW}$ stellen Mittelwerte über die beiden Strahlwege. MSW bzw. RSW dar. Der Koeffizient $\eta_T$ kann durch Ableitung der Edlen-Formel bestimmt werden und liegt bei ca. $1 \cdot 10^{-6}$ $K^{-1}$.

Eine wesentliche Voraussetzung für die Anwendbarkeit dieser Beziehung ist die konstante Zusammensetzung der Luft. Es dürfen sich daher z.B. keine Gasquellen wie z.B. Stickstoffspülungen, Schutzgaseinleitungen oder Verbrennungsprozesse in der Nähe des Interferometers befinden. Sie würden die Gaszusammensetzung lokal ändern und damit eine wichtige Vorraussetzung bzgl. der Gl. 8 stören. Falls solche Gasquellen nicht zu vermeiden sind, müssen die Strahlwege des Laserinterferometers gut abgeschirmt werden. Eine weitere Alternative hierzu wird weiter unten beschrieben.

Gemäß der vorliegenden Erfindung werden nun die mittleren Lufttemperaturabweichungen $\Delta T_{MSW}$ und $\Delta T_{RSW}$ entlang der Strahlwege MSW und RSW indirekt durch optische Absorptionsspektroskopie an einzelnen Luftbestandteilen (Molekülen) mittels einer Spektrometereinheit bestimmt. Dabei ist es günstig, einen Hauptbestandteil der Luft wie $N_2$, $O_2$, $CO_2$ oder $H_2O$ für die Spektroskopie auszuwählen. Der ausgewählte Luftbestandteil wird nachfolgend durch den Index $\varepsilon$ gekennzeichnet. Die Auswahl erfolgt durch eine geeignete Wahl der Wellenlänge $\lambda_S$ der Lichtquelle der Spektrometereinheit nahe einer absorbierenden Molekülresonanz des Luftbestandteils $\varepsilon$. Die Transmissionen $TR_{\varepsilon,M}(\lambda_S)$ und $TR_{\varepsilon,R}(\lambda_S)$ durch die Luftsäulen der Strahlwege MSW und RSW sind gegeben durch:

$$TR_{\varepsilon,M}(\lambda_S) = \exp(-\int\limits_{MSW} \alpha_\varepsilon(\lambda_S, x) dl)$$

$$TR_{\varepsilon,R}(\lambda_S) = \exp(-\int\limits_{RSW} \alpha_\varepsilon(\lambda_S, x) dl)$$

$$\text{(Gl. 10)}$$

wobei $\alpha_\varepsilon(\lambda_S, x)$ den Absorptionskoeffizient bei der Wellenlänge $\lambda_S$ am Ort x bezeichnet. Dieser Absorptionskoeffzient $\alpha_\varepsilon(\lambda_S, x)$ hängt vom Druck p, der Temperatur T, der relativen Luftfeuchte RH und der normierten, spektralen Linienverteilung $\psi_\varepsilon(\lambda_S, T, p, RH)$ ab. Letztere ist wiederum eine Funktion der Luftparameter T, p und RH :

$$\alpha_\varepsilon(\lambda_S, x) = g_\varepsilon(T, p, RH) \cdot \Psi_\varepsilon(\lambda_S, T, p, RH)$$
$$= g_\varepsilon(T(x), p_0, RH_0) \cdot \Psi_\varepsilon(\lambda_S, T(x), p_0, RH_0) \qquad \text{(Gl. 11)}$$

mit der Normierung über die Absorptionslinie $A_\varepsilon$:

$$\int_{A_\varepsilon} \Psi_\varepsilon(\lambda_S, T(x), p_0, RH_0) d\lambda_S = 1 \qquad \text{(Gl. 12)}$$

Die Funktion $g_\varepsilon$ beinhaltet im Wesentlichen den proportionalen Einfluss der Dichte $\rho_\varepsilon$ des Luftbestandteils $\varepsilon$ und die temperaturabhängige Besetzungsdichte $\sigma_\varepsilon(T)$ des Ausgangszustands der Absorptionslinie $A_\varepsilon$ (siehe M.E. Webber et al., "In situ Combustion Measurements of CO2 Using Diode Laser Sensors Near 2.0 $\mu$m", American Institute of Aeronautics and Astronautics Paper 2000-0775).

Bei einem idealen Gas mit der Dichte $\rho$ und einem relativen Anteil $r_\varepsilon$ des Luftbestandteils $\varepsilon$ an der gesamten Luft gilt:

$$\rho_\varepsilon = r_\varepsilon \cdot \rho = r_\varepsilon \cdot \frac{p}{R \cdot T}, \qquad \text{(Gl. 13)}$$

wobei R die Rydbergkonstante bezeichnet. Bei genauer Betrachtung hängt der relative Anteil $r_\varepsilon$ von der relativen Luftfeuchte RH und auch von der Temperatur T ab.

Für die Besetzungsdichte $\sigma_\varepsilon(T)$ gilt im thermischen Gleichgewicht:

$$\sigma_\varepsilon(T) = \frac{e^{-E_\varepsilon/kT}}{\sum_n e^{-E_n/kT}}, \qquad \text{(Gl. 14)}$$

wobei $E_n$ die Energie des Zustands n des ausgewählten Moleküls bezeichnet, $E_\varepsilon$ die Energie des Ausgangszustands der ausgewählten Absorptionslinie $A_\varepsilon$ und k die Boltzmann-Konstante.

Daraus resultiert eine komplexe Temperaturabhängigkeit der Funktion $g_\varepsilon$:

$$g_\varepsilon(T, p, RH) \propto r_\varepsilon(T, RH) \cdot \frac{p}{T} \cdot \frac{e^{-E_\varepsilon/kT}}{\sum_n e^{-E_n/kT}} \qquad \text{(Gl. 15)}$$

Die spektrale Linienverteilung $\psi_\varepsilon(\lambda_S, T, p, RH)$ beinhaltet ebenso verschiedene Beiträge. Zum einen führt die thermische Bewegung der Moleküle zu einer temperaturabhängigen Dopplerverbreiterung der Absorptionslinie. Andererseits beeinflusst der Luftdruck p die Zahl der Stöße zwischen den Molekülen, so dass es zu einer so genannten Druckverbreiterung kommt.

Je nachdem, ob der Absorptionskoeffizient $\alpha_\varepsilon(\lambda_S, x)$ bei einer definierten Wellenlänge $\lambda_S$ bestimmt wird (nachfolgend: "spektral selektiver Fall") oder spektral über die Absorptionslinie $A_\varepsilon$ integriert wird (nachfolgend: "spektral integrierter Fall"), können verschiedene Linearisierungen bzgl. der ortsabhängigen Temperatur T(x) vorgenommen werden:

$$\alpha_\varepsilon(\lambda_S, x) = \alpha_{\varepsilon 0} + \gamma_\varepsilon \cdot \Delta T(x)$$
$$\int_{A_\varepsilon} \alpha_\varepsilon(\lambda_S, x) d\lambda_S = \alpha'_{\varepsilon 0} + \gamma'_\varepsilon \cdot \Delta T(x), \qquad \text{(Gl. 16)}$$

wobei $\alpha_{\varepsilon 0}$, $\gamma_\varepsilon$ und $\alpha'_{\alpha 0}$, $\gamma'_\varepsilon$ im Allgemeinen von $\lambda_S$, $T_0$, $p_0$ und $RH_0$ abhängen. Im spektral selektiven Fall ist es vorteilhaft, die Wellenlänge $\lambda_S$ im Zentrum der Absorptionslinie zu wählen.

Die Gl. 10 und 16 erlauben nun die erfindungsgemäße Bestimmung der mittleren Lufttemperaturabweichungen $\Delta T_{MSW}$ und $\Delta T_{RSW}$ entlang der Strahlwege MSW und RSW für den spektral selektiven Fall:

$$\Delta T_{MSW} = -\frac{1}{\gamma_\varepsilon \cdot L_{MSW}} \cdot \ln(TR_{\varepsilon,M}(\lambda_S)) - \frac{\alpha_{\varepsilon 0}}{\gamma_\varepsilon}$$

$$\Delta T_{RSW} = -\frac{1}{\gamma_\varepsilon \cdot L_{RSW}} \cdot \ln(TR_{\varepsilon,R}(\lambda_S)) - \frac{\alpha_{\varepsilon 0}}{\gamma_\varepsilon}$$

(Gl. 17a)

bzw. für den spektral integrierten Fall:

$$\Delta T_{MSW} = -\frac{1}{\gamma'_\varepsilon \cdot L_{MSW}} \cdot \int_{A_\varepsilon} \ln(TR_{\varepsilon,M}(\lambda_S))d\lambda_S - \frac{\alpha'_{\varepsilon 0}}{\gamma'_\varepsilon}$$

$$\Delta T_{RSW} = -\frac{1}{\gamma'_\varepsilon \cdot L_{RSW}} \cdot \int_{A_\varepsilon} \ln(TR_{\varepsilon,R}(\lambda_S))d\lambda_S - \frac{\alpha'_{\varepsilon 0}}{\gamma'_\varepsilon}$$

(Gl. 17b)

Die Gleichungen 9 und 17 können zusammengefasst werden, für den spektral selektiven Fall:

$$n_M = n(T_0, p_0, RH_0) - \beta_\varepsilon \cdot [\frac{1}{L_{MSW}} \cdot \ln(TR_{\varepsilon,M}(\lambda_S)) + \alpha_{\varepsilon 0}]$$

$$n_R = n(T_0, p_0, RH_0) - \beta_\varepsilon \cdot [\frac{1}{L_{RSW}} \cdot \ln(TR_{\varepsilon,R}(\lambda_S)) + \alpha_{\varepsilon 0}]$$

(Gl. 18a)

und den spektral integrierten Fall:

$$n_M = n(T_0, p_0, RH_0) - \beta'_\varepsilon \cdot [\frac{1}{L_{MSW}} \cdot \int_{A_\varepsilon} \ln(TR_{\varepsilon,M}(\lambda_S))d\lambda_S + \alpha'_{\varepsilon 0}]$$

$$n_R = n(T_0, p_0, RH_0) - \beta'_\varepsilon \cdot [\frac{1}{L_{RSW}} \cdot \int_{A_\varepsilon} \ln(TR_{\varepsilon,R}(\lambda_S))d\lambda_S + \alpha'_{\varepsilon 0}]$$

(Gl. 18b)

mit $\beta_\varepsilon = \frac{\eta_T}{\gamma_\varepsilon}$ und $\beta'_\varepsilon = \frac{\eta_T}{\gamma'_\varepsilon}$. Die Koeffizienten $\alpha_{\varepsilon 0}$, $\beta_\varepsilon$ bzw. $\alpha'_{\varepsilon 0}$, $\beta'_\varepsilon$ hängen im Allgemeinen von den nominalen Luftparametern $T_0$, $p_0$, $RH_0$ ab. Bei sehr hohen Genauigkeitsanforderungen müssen deshalb diese Abhängigkeiten zumindest einmalig bestimmt werden. Die nominalen Luftparameter lassen sich dabei laufend durch die Umweltsensoren messen. Alternativ können die Koeffizienten $\alpha_{\varepsilon 0}$, $\beta_\varepsilon$ bzw. $\alpha'_{\varepsilon 0}$, $\beta'_\varepsilon$ auch durch ein zusätzliches Kalibrierinterferometer mit spektroskopischer Absorptionsmessung bestimmt werden. Da die Längen der Luftstrecken im Kalibrierinterferometer bekannt sind, können durch eine Ausgleichsrechnung anhand der Gleichungen 2, 3 und 18 die Koeffizienten $\alpha_{\varepsilon 0}$, $\beta_\varepsilon$ bzw. $\alpha'_{\alpha 0}$, $\beta'_\varepsilon$ abgeleitet werden.

Im folgenden wird der erste Term n ($T_0$, p0, $RH_0$) aus Gleichung 18a bzw. 18b als nomineller Brechungsindex bezeichnet, der zweite Term als Brechungsindexfluktuation. Die beiden Terme ergeben in Summe den mittleren Brechungsindex $n_M$ bzw. $n_R$.

Die Gl. 2, 3 und 18 bilden die Basis für die erfindungsgemäße Kompensation der Luftbrechungsindexschwankungen mit Hilfe der Messung der Transmissionen $T_{\varepsilon,M}$ und $T_{\varepsilon,R}$ im Bereich einer Absorptionslinie.

Neben dem spektral selektiven und dem spektral integrierten Fall können auch weitere, aus den Transmissionswerten abgeleitete Parameter herangezogen werden. So kann z.B. auch die spektrale Breite der Absorptionslinie bestimmt werden, welche wie oben beschrieben ebenfalls von der Lufttemperatur abhängt. Die Brechungsindex-Bestimmung erfolgt dann in einer zu den Gleichungen 18a und 18b analogen Art und Weise.

Obige Gleichungen implizieren, dass die spektroskopisch bestimmten, mittleren Lufttemperaturabweichungen $\Delta T_{MSW}$ und $\Delta T_{RSW}$ dieselben Luftsäulen erfassen wie die, die vom Interferometer durchstrahlt werden. Sowohl für den Messstrahlweg MSW als auch für den Referenzstrahlweg RSW muss deshalb der Laserstrahl der Spektrometereinheit vorzugsweise möglichst kollinear oder antikollinear zum Strahlenbündel des Interferometers verlaufen. Darüber hinaus sollten die Strahlquerschnitte bzw. die Strahlprofile der Lichtquellen des Interferometers und der Spektrometereinheit identisch sein, um dieselbe transversale Gewichtung der Lufttemperaturverteilungen zu ermöglichen.

Bei den häufig verwendeten Interferometern, deren Referenzstrahlweg RSW vollständig oder nahezu vollständig in Glas verläuft, kann die Bestimmung des Brechungsindex $n_R$ entfallen und es gilt statt Gl. 3:

$$n_{eff} = n_M \qquad \text{(Gl. 19)}$$

Als Molekülresonanzen eignen sich grundsätzlich elektronische, vibronische oder rotatorische Übergänge der Moleküle, solange sie optisch ausreichend absorbierend wirken. Elektronische Übergänge liegen in der Regel im UV-Bereich bei $\lambda_S < 400$ nm und können durch die heute verfügbaren UV-Laserdioden (evtl. mit Frequenzverdoppelung oder Frequenzverdreifachung) gemessen werden. Durch die geringe Temperaturabhängigkeit der Besetzungsdichte des Ausgangszustands (= Grundzustand) vereinfachen sich die obigen Formeln etwas. Als günstige Molekülresonanzen im UV-Bereich eignen sich eher die schwachen Absorptionslinien, da generell die Absorptionslinien eher zu stark sind. Alternativ kann bei einer starken Molekülresonanz im UV-Bereich die Wellenlänge $\lambda_S$ im Flankenbereich der Linie bei noch ausreichender Transmission gewählt werden.

Besonders vorteilhaft aber sind vibronische Übergänge, da sie im gut zugänglichen, roten oder nahen infraroten Spektralbereich liegen und geeignete, schmalbandige und kostengünstige Lichtquellen als Spektrometer-Lichtquellen zur Verfügung stehen. Hierbei handelt sich es z.B. um DFB-Laserdioden, VCSELs oder Laserdioden mit externer Kavität im Spektralbereich $\lambda_S = 0.5\ \mu\text{m} \ldots 10\ \mu\text{m}$. Typische Linienbreiten von DFB-Lasern liegen unter 10 MHz, während die Linienbreiten von typischen vibronischen Molekülübergängen bei normalen Luftbedingungen im Bereich 3 GHz liegen und damit deutlich größer sind als die des Lasers. Dies ist vorteilhaft, da hierdurch die detektierten Absorptionseffekte besonders deutlich werden.

Rotationsübergänge ließen sich grundsätzlich mit Hilfe von Quantenkaskaden-Laserdioden im Wellenlängenbereich $\lambda_S > 10\ \mu\text{m}$ messen.

Eine nochmalige Verbesserung der erfindungsgemäßen Vorrichtung bzw. des erfindungsgemäßen Verfahrens lässt sich durch eine Messung mehrerer Absorptionslinien herbeiführen. Diese Messungen sollten getrennt erfasst werden und können z.B. zeitlich nacheinander durch ein erweitertes Durchstimmen der Spektroskopie-Lichtquelle erfolgen. Die weiteren, erfassten Absorptionslinien können sich auf denselben Luftbestandteil $\varepsilon$ oder auf verschiedene Luftbestandteile $\varepsilon_1$, $\varepsilon_2$, $\varepsilon_3$,... beziehen. Durch die zusätzliche Information kann z.B. die Variation der Luftzusammensetzung korrigiert werden. Besonders vorteilhaft ist es dabei, den Wasserdampf ($H_2O$) neben einem zweiten Luftbestandteil direkt zu erfassen, da dieser Luftbestandteil die größten Schwankungen in der Luftzusammensetzung herbeiführt. In Anwendungen, in denen Gase eingeleitet werden müssen, können diese Gaskonzentrationen ebenfalls direkt durch zugehörige Absorptionslinien gemessen werden. Eine Abschirmung dieser Gasquellen vom Interferometerstrahlengang ist dann nicht mehr erforderlich.

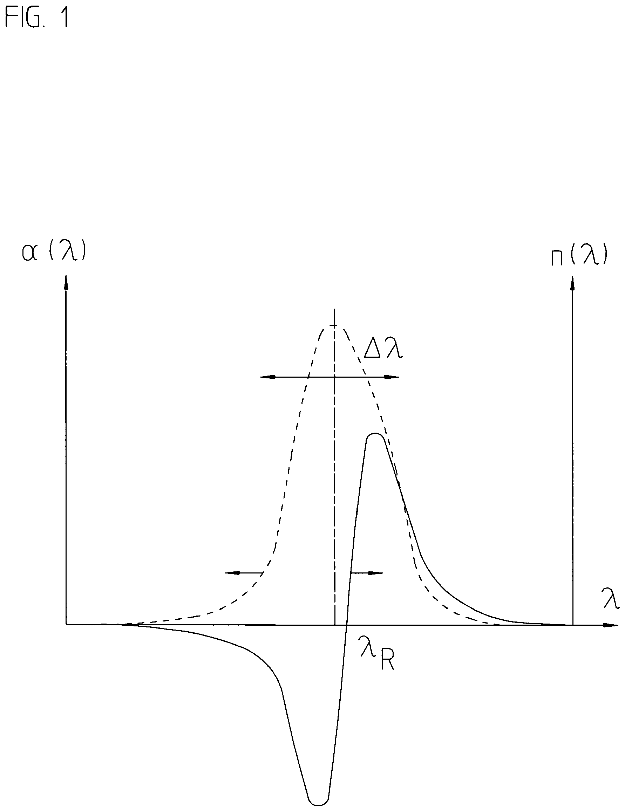

Nach der Kramers-Kronik-Relation ist mit jeder Absorptionlinie eines Molekülübergangs auch ein Dispersionsverlauf, d.h. eine Änderung des Brechungsindex $n(\lambda)$ im Bereich einer Molekülresonanz bei $\lambda=\lambda_R$ verbunden; hierzu sei etwa auf die Figur 1 verwiesen. Dieser Dispersionsverlauf weist innerhalb der spektralen Breite $\Delta\lambda$ der Absorptionslinie eine negative Steigung (anomale Dispersion) auf. Absorptionsmessungen und Dispersionsmessungen liefern äquivalente Informationen, die durch die Kramers-Kronik-Relation ineinander umgerechnet werden können (siehe "Method for obtaining gas concentration with a phase-based metrology system", Craig R. Schwarze et. al., Appl. Optics 37, Nr. 18, 3942-3947, 1998). Dispersionseffekte sind in der Praxis jedoch wesentlich schwächer und daher schwieriger zu detektieren als die Absorptionseffekte. So ergibt sich aus einem einfachen atomaren Schwingungsmodell, dass die maximale Brechungsindexänderung $\Delta n_{MAx}$ und die maximale Absorption $\Delta\alpha_{MAX}$ innerhalb der Resonanz in folgendem Zusammenhang stehen:

$$\Delta n_{MAX} \approx \frac{\lambda}{2\pi} \cdot \Delta\alpha_{MAX} \qquad \text{(Gl. 20)}$$

Für einen typischen vibronischen Übergang mit $\Delta\alpha_{MAX}\sim0.01$ m$^{-1}$ bei $\lambda\sim600$nm ergibt sich $\Delta n_{MAX}\sim10^{-9}$. Dies entspricht einer scheinbaren Längenänderung in einem Interferometer von nur 1 nm pro Meter Messstrecke, was in der Praxis kaum zu detektieren ist. Andererseits lässt sich eine zugehörige Absorption von 1 % pro Meter Messstrecke einfach und mit hoher Genauigkeit nachweisen. Aus diesen Abschätzungen zeigt sich der besondere Vorteil einer Absorptionsmessung im Vergleich zu einer Dispersionsmessung.

Anschließend werden nach diesen theoretischen Erörterungen nunmehr konkrete Ausführungsbeispiele erfindungsgemäßer Interferometeranordnungen sowie von Verfahren zu deren Betrieb erläutert.

### 1. Ausführungsbeispiel

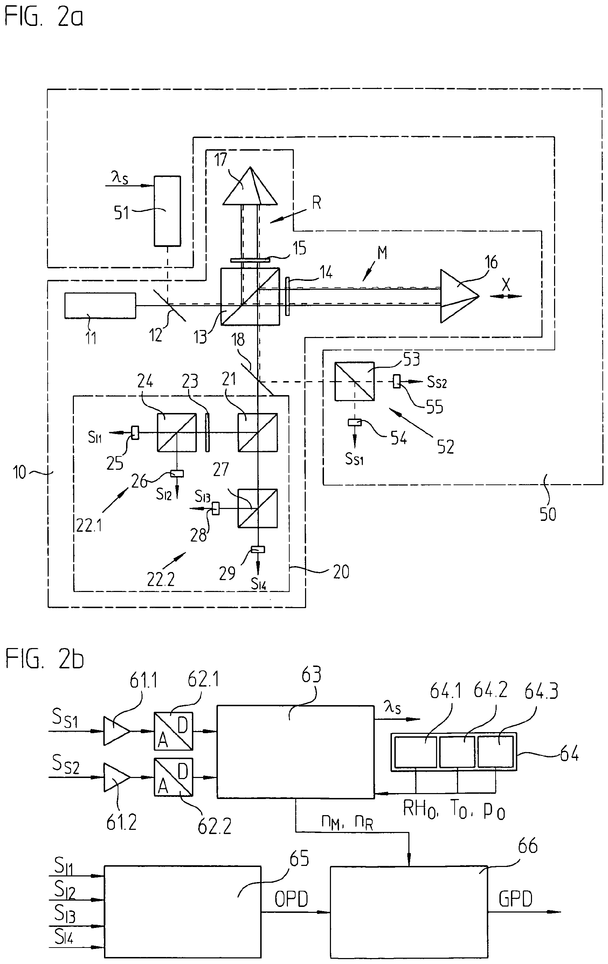

Ein erstes Ausführungsbeispiel der erfindungsgemäßen Interferometeranordnung ist in den Figuren 2a und 2b schematisiert dargestellt. Figur 2a zeigt hierbei den Strahlengang derselben, Figur 2b veranschaulicht zugehörige die Signalverarbeitung.

Die erfindungsgemäße Interferometeranordnung kann beispielsweise zur hochpräzisen Positionsbestimmung eines in ein oder mehreren Messrichtungen verschiebbaren Messobjekts verwendet werden. Entsprechende Anwendungen hierzu gibt es etwa in der Halbleiterfertigung, wenn z.B. die Position des Tisches eines Wafersteppers zu bestimmen ist. Alternativ hierzu kann die erfindungsgemäße Interferometeranordnung jedoch auch zur hochpräzisen Erfassung der Topographie eines Messobjekts eingesetzt werden. Es erfolgt in diesem Fall eine Positionsbestimmung bzgl. der Oberfläche eines Messobjekts, welches im Messarm angeordnet ist.

Von der erfindungsgemäßen Interferometeranordnung ist im Beispiel der Figur 2a i.w. ein Interferometer 10 sowie eine Spektrometereinheit 50 dargestellt; verschiedene signalverarbeitenden Komponenten sind in Figur 2b gezeigt.

Das Interferometer 10 umfasst in dieser Ausführungsform eine Interferometer-Lichtquelle 11, etwa einen geeigneten Laser, der ein linear polarisiertes Strahlenbündel mit der Wellenlänge $\lambda_I$ emittiert; die Wellenlänge $\lambda_I$ kann beispielsweise zu $\lambda_I = 500nm \ldots\ldots 1500nm$ gewählt werden; besonders bevorzugte Wellenlängen wären etwa $\lambda_I = 633nm$ oder $\lambda_I = 532nm$. In Figur 2a ist wie auch in den nachfolgend zu beschreibenden Figuren der zu erläuternde Strahlengang des Interferometers 10 durchgezogen eingezeichnet. Das von der Interferometer-Lichtquelle 11 emittierte Strahlenbündel trifft nach dem Passieren eines ersten Strahlteilerelements 12 auf ein erstes Interferometer-Strahlteilerelement 13, wo eine Aufteilung des Strahlenbündels in zwei Teilstrahlenbündel erfolgt, die einem Messarm M und einem Referenzarm R des Interferometers 10 zugeführt werden. Das erste Strahlteilerelement 12 ist hierbei als dichroitischer Strahlteiler ausgebildet, das erste Interferometer-Strahlteilerelement 13 als bekannter polarisierender Strahlteilerwürfel.

Im Mess- und Referenzarm M, R durchlaufen die Teilstrahlenbündel jeweils $\lambda$/4-Platten 14, 15 bevor sie auf Retroreflektorelemente 16, 17 auftreffen, von denen sie wieder in Richtung des Interferometer-Strahlteilerelements 13 zurückreflektiert werden. Die Retroreflektorelemente 16, 17 sind in diesem Beispiel als bekannte Tripelprismen ausgebildet.

Das Retroreflektorelement 17 im Referenzarm R des Interferometers 10 ist stationär angeordnet, das Retroreflektorelement 16 im Messarm M des Interferometers 10 ist in diesem Ausführungsbeispiel hingegen zusammen mit einem - nicht dargestellten Messobjekt, dessen Position zu bestimmen ist - beweglich in der angegebenen x-Richtung (Messrichtung) angeordnet.

Nach dem erneuten Durchtritt der von den Retroreflektorelementen 16, 17 zurückreflektierten Teilstrahlenbündel durchlaufen diese erneut die jeweiligen $\lambda$/4-Platten 14, 15 und werden schließlich mit Hilfe des ersten Interferometer-Strahlteilerelements 13 zur Überlagerung gebracht. Die überlagerten Teilstrahlenbündel durchlaufen anschließend ein zweites dichroitisches Strahlteilerelement 18, bevor diese in Richtung einer Interferometer-Detektoreinheit 20 propagieren.

In der Interferometer-Detektoreinheit 20 ist ein zweites InterferometerStrahlteilerelement 21 vorgesehen, ausgebildet als neutraler Strahlteilerwürfel, über den eine Aufteilung des Paares von Teilstrahlenbündeln in Richtung zweier Detektoranordnungen 22.1, 22.2 erfolgt.

Die erste Detektoranordnung 22.1 umfasst eine weitere $\lambda$/4-Platte 23, ein drittes Interferometer-Strahlteilerelement 24, ausgebildet als polarisierender Strahlteilerwürfel sowie zwei nachgeordnete Interferometer-Detektorelemente 25, 26. An den Ausgängen der beiden Interferometer-Detektorelemente 25, 26 resultieren die Interferometersignale $S_{I1}$, $S_{I2}$.

Die zweite Detektoranordnung 22.2 umfasst ein viertes Interferometer-Strahlteilerelement 27, wiederum ausgebildet als polarisierender Strahlteilerwürfel sowie zwei nachgeordnete Interferometer-Detektorelemente 28, 29. An den Ausgängen der beiden Interferometer-Detektorelemente 28, 29 resultieren weitere Interferometersignale $S_{I3}$, $S_{I4}$. Die Interferometer-Detektorelemente 25, 26, 28, 29 sind vorzugsweise als Detektorarray ausgebildet.

In nicht-dargestellter Weise sind die Polarisationsachsen der beiden polarisierenden Interferometer-Strahlteilerelemente 24 und 27 in Strahlrichtung gesehen um 45° zu der Polarisationsachse des polarisierenden Interferometer-Strahlteilerelements 13 gekippt. Dadurch werden die beiden Teilstrahlenbündel des Messarms M und des Referenzarms R zur Interferenz gebracht.

Die von den Interferometer-Detektorelementen 25, 26, 28, 29 erzeugten Interferometersignale $S_{I1}$, $S_{I2}$, $S_{I3}$, $S_{I4}$ werden anschließend in bekannter Art und Weise ausgewertet, um eine Messgröße bzgl. der interessierenden optischen Weglängendifferenz OPD des Interferometers 10 zu erzeugen, die ein Maß für die Position des Messobjekts darstellt.

Die in Figur 2a dargestellte Variante des Interferometers 10 inclusive der hierbei genutzten Signalverarbeitung entspricht bekannten Interferometern aus dem Stand der Technik. Grundsätzlich können hierbei sowohl Homodynals auch Heterodyn-Verfahren zum Betrieb und zur Auswertung genutzt werden.

Maßgeblich für die vorliegende Erfindung ist nunmehr der Einsatz bzw. die Ausgestaltung der Erfassungsmittel, die zur Erfassung von Fluktuationen des Brechungsindexes der Luft im Mess- und/oder Referenzarm M, R des Interferometers 10 verwendet werden. So ist erfindungsgemäß vorgesehen, hierzu eine Spektrometereinheit 50 als entsprechendes Erfassungsmittel einzusetzen, deren Aufbau bzw. Integration in das Interferometer 10 nachfolgend erläutert sei; der Strahlengang der für die Funktion der Spektrometereinheit 50 maßgeblichen Strahlenbündel ist in Figur 2a strichliniert eingezeichnet.

Die Spektrometereinheit 50 umfasst eine Spektrometer-Lichtquelle 51, die ebenfalls als Laser ausgebildet ist, welcher ein linear polarisiertes Strahlenbündel mit der Wellenlänge $\lambda_S$ emittiert. Hierbei ist die Wellenlänge $\lambda_S$ der von der Spektrometer-Lichtquelle 51 emittierten Strahlung entsprechend den obigen theoretischen Überlegungen so gewählt, dass diese im Bereich einer Absorptionslinie mindestens eines Luftbestandteils $\varepsilon$ liegt. Beispielsweise kann es sich hierbei um eine Absorptionslinie von Wasser bei 723.5nm oder um eine Absorptionslinie von Sauerstoff bei 761 nm handeln; die Spektrometer-Lichtquelle 51 emittiert in diesem Fall dann ebenfalls Strahlung bei 723.5nm bzw. 761 nm. Grds. kommt auch in Betracht, die Wellenlänge der Spektrometer-Lichtquelle im Bereich mindestens einer Absorptionslinie der Luftbestandteile $N_2$, $O_2$, $CO_2$ etc. zu wählen. Eine umfassende Zusammenstellung von Absorptionslinien der Luftbestandteile findet man in "The HITRAN database: 1986 edition", L.S. Rothman et al., Appl. Opt. 26 No. 19 (1987), 4058 - 4097.

Als vorteilhaft erweist sich ferner, mehrere Absorptionslinien mit stark unterschiedliche Temperaturkoeffizienten der Absorption zu erfassen; ebenso ist es günstig, wenn die spektrale Breite der jeweiligen Spektrometer-Lichtquelle vergleichbar oder geringer als die spektrale Breite der jeweiligen Absorptionslinie ist.

Zur Wellenlängeneinstellung und -modulation der Spektrometer-Lichtquelle 51 nutzt man vorteilhafterweise die Temperatur- und Stromabhängigkeit der Wellenlänge von Laserdioden. Die Temperatur lässt sich etwa durch ein Peltierelement regeln, auf dem die Laserdiode montiert ist. Durch eine geeignete Wahl der Betriebstemperatur der Laserdiode erfolgt die Grobeinstellung der Wellenlänge. Die Feineinstellung und ggf. auch eine schnelle Modulation wird durch einen entsprechenden, ggf. modulierten Betriebsstrom erreicht. Alternative Wellenlängeneinstellungen und Wellenlängenmodulationsmöglichkeiten bieten External-Cavity-Laserdioden oder Laserdioden mit nachgeschalteten optischen Modulatoren.

Das von der Spektrometer-Lichtquelle 51 emittierte Strahlenbündel wird über das erste Strahlteilerelement 12 um 90° umgelenkt und derart dem Strahlenbündel der Interferometer-Lichtquelle 11 kollinear überlagert. Nachfolgend erfolgt wie im Interferometer-Strahlengang eine Aufspaltung des Strahlenbündels von der Spektrometer-Lichtquelle 51 über das erste Interferometer-Strahlteilerelement 13. Im Mess- und Referenzarm M, R durchlaufen die Teilstrahlenbündel der Spektrometer-Lichtquelle 51 ebenfalls die $\lambda$/4-Platten 14, 15 bevor sie auf die Retroreflektorelemente 16, 17 auftreffen, von denen sie wieder in Richtung des Interferometer-Strahlteilerelements 13 zurückreflektiert werden. Nach dem nochmaligen Durchlaufen der $\lambda$/4-Platten 14, 15 gelangen die Teilstrahlenbündel der Spektrometer-Lichtquelle 51 schließlich wieder auf das erste Interferometer-Strahlteilerelement 13, wo sie zu einem überlagerten Paar von Teilstrahlenbündeln überlagert werden, die wie die Teilstrahlenbündel der Interferometer-Lichtquelle 11 in Richtung des zweiten Strahlteilerelements 18 weiterpropagieren. Über das zweite Strahlteilerelement 18 werden die Teilstrahlenbündel der Spektrometer-Lichtquelle 51 von denjenigen der Interferometer-Lichtquelle 11 abgespalten und propagieren anschließend in Richtung einer Spektrometer-Detektoreinheit 52. In der Spektrometer-Detektoreinheit 52 gelangen die Teilstrahlenbündel zunächst auf ein Spektrometer-Strahlteilerelement 53, das als polarisierender Strahlteilerwürfel ausgebildet ist. Dort wird das einfallende Strahlenbündel in zwei Teilstrahlenbündel aufgespalten, die anschließend in Richtung zweier nachgeordneter Spektrometer-Detektorelemente 54, 55 propagieren. Über ein erstes Spektrometer-Detektorelement 54 wird dasjenige Teilstrahlenbündel erfasst, welches zuvor den Messarm M des Interferometers 10 durchlaufen hat; über das zweite Spektrometer-Detektorelement 55 wird dasjenige Teilstrahlenbündel erfasst, welches zuvor den Referenzarm R des Interferometers 10 durchlaufen hat. Das Spektrometer-Strahlteilerelement 53 ist hierbei im Unterschied zu den dritten und vierten Interferometer-Strahlteilerelementen 24, 27 dergestalt ausgebildet bzw. orientiert, dass keine Interferenz der Teilstrahlenbündel aus dem Mess- und dem Referenzarm M, R resultiert. Über die Spektrometer-Detektorelemente 54, 55 werden daher Spektrometersignale $S_{S1}$, $S_{S2}$ erfasst, die jeweils ein Absorptionssignal bzgl. des durchlaufenen Weges im Mess- und Referenzarm M, R darstellen; in einer vorteilhaften Ausführung sind die Spektrometer-Detektorelemente 54, 55 als Detektorarray ausgebildet. Konkret werden im vorliegenden Beispiel erfindungsgemäß Spektrometersignale $S_{S1}$, $S_{S2}$ erzeugt, die die Absorption eines Luftbestandteils $\varepsilon$ bzgl. der Spektrometer-Lichtquellenwellenlänge $\lambda_S$ im Mess- und/oder Referenzarm M, R charakterisieren.

Das erste Interferometer-Strahlteilerelement 13 sowie die beiden $\lambda$/4-Platten 14, 15 im Mess- und Referenzarm des Interferometers werden von den Teilstrahlenbündeln der Interferometer-Lichtquelle 11 als auch von der Spektrometer-Lichtquelle 51 durchlaufen. Von daher müssen diese Komponenten ihre jeweiligen polarisationsoptischen Eigenschaften bei den beiden Wellenlängen $\lambda_I$ und $\lambda_S$ erfüllen. Eine spezielle Optimierung der entsprechenden polarisationsoptisch wirkenden Schichten dieser Komponenten ist daher erforderlich. Als vorteilhaft für diese Optimierung erweist sich hierbei, wenn die beiden Wellenlängen $\lambda_I$ und $\lambda_S$ eng benachbart zueinander gewählt werden.

Anhand der Figur 2b sei nachfolgend nunmehr ein Beispiel für die Verarbeitung der verschiedenen Signale

$S_{I1}$, $S_{I2}$, $S_{I3}$, $S_{I4}$, $S_{S1}$, $S_{S2}$ des Interferometers 10 und der Spektrometereinheit 50 in der erfindungsgemäßen Interferometeranordnung erläutert.

Wie aus Figur 2b ersichtlich, werden die Spektrometersignale $S_{S1}$, $S_{S2}$ nach der Verstärkung über die Verstärkerelemente 61.1, 61.2 und der Digitalisierung über die A/D-Wandlerelemente 62.1, 62.2 einer ersten Prozessoreinheit 63 zugeführt.

Die erste Prozessoreinheit 63 regelt desweiteren die Wellenlänge $\lambda_S$ der Spektrometer-Lichtquelle 51 und stimmt diese im Bereich der mindestens einen Absorptionslinie des mindestens einen Luftbestandteils ε durch, dessen Absorptionscharakteristik bestimmt wird. Vorzugsweise wird die Mittenwellenlänge des Durchstimmbereichs hierbei so gewählt, dass diese mit dem Absorptionsmaximum des entsprechenden Luftbestandteils ε übereinstimmt oder in einem festen Abstand hierzu steht. Die Zykluszeit für einen derartigen Durchstimmvorgang sollte hierbei möglichst kurz gewählt sein, Werte im Bereich 10msec bis 1 μsec erweisen sich als vorteilhaft. Gleichzeitig erfolgt hierzu die Messung der Transmissionen $T_{\varepsilon,M}(\lambda_S)$ und $T_{\varepsilon,M}(\lambda_S)$ im Mess- und Referenzarm M, R.

Da die Signalpegel der Spektrometersignale $S_{S1}$, $S_{S2}$ nicht nur von der Absorption in Luft, sondern auch von den Reflexions- bzw. Transmissionseigenschaften sowie von den Lage- und Formtoleranzen aller Bauteile des Interferometers abhängen, sollten diese unerwünschten Signalanteile möglichst korrigiert werden. Dazu werden während des Durchstimmvorgangs der Wellenlänge $\lambda_S$ die Spektrometersignale $S_{S1}$, $S_{S2}$ im Absorptionsmaximum des Luftbestandteils ε und außerhalb der Absorptionslinie bestimmt und in Differenz gesetzt. Diese Differenz hängt nur mehr von der Absorption des Luftbestandteils ε und der optischen Leistung der Spektrometer-Lichtquelle 51 ab. Letztere wird in nicht gezeigter Form entweder stabilisiert oder ebenfalls gemessen und entsprechend verrechnet.

Neben den Spektrometersignalen $S_{S1}$, $S_{S2}$ liegen an der ersten Prozessoreinheit 63 in diesem Ausführungsbeispiel ferner die Ausgangssignale $RH_0$, $T_0$, $p_0$ von schematisch angedeuteten Brechungsindex-Bestimmungsmitteln 64 an. Die Brechungsindex-Bestimmungsmittel 64 gehören in diesem Ausführungsbeispiel ebenfalls zu den oben erwähnten Erfassungsmitteln zur Erfassung der Brechungsindex-Flukutationen und dienen konkret zur Ermittlung des mittleren Brechungsindexes der Luft im Bereich des Mess- und/oder Referenzarms M, R. Üblicherweise umfassen die Brechungsindex-Bestimmungsmittel 64 mehrere Sensoren 64.1, 64.2, 64.3, die nominelle Messwerte für die relative Luftfeuchte RH, die Lufttemperatur T und den Luftdruck p im Bereich des Mess- und/oder Referenzarms M, R an die erste Prozessoreinheit 63 liefern.

Die erste Prozessoreinheit 63 bestimmt im vorliegenden Beispiel aus den Signalen der Brechungsindex-Bestimmungsmittel 64 und den Spektrometersignalen $S_{S1}$, $S_{S2}$ über die oben im Theorieteil aufgeführten Gleichungen 18a, 18b die Werte für die lokalen Brechungsindizes $n_M$ und $n_R$ im Mess- und Referenzarm M, R. Die dergestalt ermittelten Werte für $n_M$ und $n_R$ werden als Ausgangssignale der ersten Prozessoreinheit 63 einer nachgeordneten Korrektureinheit 66 zur Weiterverarbeitung zur Verfügung gestellt.

Alternativ hierzu kann die erste Prozessoreinheit 63 auch hierbei dergestalt ausgebildet sein, dass aus den eingangsseitig anliegenden Spektrometersignalen $S_{S1}$, $S_{S2}$ die Fluktuationen des Brechungsindexes $n_M$, $n_R$ der Luft im Mess- und/oder Referenzarm M, R bestimmt werden können und entsprechende Ausgangssignale zur Weiterverarbeitung bereitgestellt werden. Eine Auswertung von Ausgangssignalen von Brechungsindex-Bestimmungsmitteln ist in einer derartigen Variante grds. nicht nötig.

Wie aus Figur 2b ebenfalls ersichtlich, werden die Interferometersignale $S_{I1}$, $S_{I2}$, $S_{I3}$, $S_{I4}$ im vorliegenden Beispiel einer zweiten Prozessoreinheit 65 zugeführt, welche auf bekannte Art und Weise die optische Weglängendifferenz OPD bestimmt und diese als Ausgangssignal ebenfalls zur Weiterverarbeitung der Korrektureinheit 66 zur Verfügung stellt.

Die Korrektureinheit 66 ist dergestalt ausgebildet, dass über die eingangsseitig anliegenden Signale bzgl. der Brechungsindizes $n_M$ und $n_R$ gemäß Gleichung 3 zunächst ein effektiver Brechungsindex $n_{eff}$ für den Mess- und/oder Referenzarm M, R bestimmt werden kann, um diesen dann in Verbindung mit den Interferometersignalen bzw. den entsprechend zur optischen Weglängendifferenz OPD aufbereiteten Interferometersignalen $S_{I3}$, $S_{I4}$, $S_{S1}$, $S_{S2}$ gemäß Gleichung 2 derart zu verarbeiten, dass ausgangsseitig die als Messgröße interessierende geometrische Weglängendifferenz GPD bzw. korrigierte Positionssignale bzgl. der Position des Messobjekts im Messarm M resultieren.

Alternativ zum unmittelbaren Durchstimmen der Wellenlänge $\lambda_S$ einer schmalbandigen Spektrometer-Lichtquelle 51 könnte vorgesehen werden, dass eine breitbandige Spektrometer-Lichtquelle 51 vorgesehen ist, deren spektrale Ausdehnung die mindestens eine Absorptionslinie des mindestens einen Luftbestandteils ε überdeckt. In diesem Fall muss unmittelbar vor dem Strahlteilerelement 53 in Figur 2a ein Fabry-Perot-Interferometer angeordnet werden. Dieses wird über die erste Prozessoreinheit 63 im Bereich der mindestens einen Absorptionslinie des mindestens einen Luftbestandteils ε durchgestimmt, dessen Absorptionscharakteristik bestimmt wird.

Das Regeln des Durchstimmbereichs der Spektrometer-Lichtquelle oder das Durchstimmen des Fabry-Perot-Interferometers kann hierbei so erfolgen, dass die jeweilige Mittenwellenlänge in einem festen Abstand zum Absorptionsmaximum desjenigen Luftbestandteils ε steht, dessen Absorptionscharakteristik bestimmt wird.

Die in Figur 2b dargestellten Prozessoreinheiten 63, 65 sowie die Korrektureinheit 66 können natürlich in soft- und/oder hardwaremäßig beliebiger Art und Weise ausgestaltet werden, d.h. die in Figur 2b veranschaulichte Trennung der verschiedenen Komponenten diente lediglich der einfacheren Erläuterung der Signalverarbeitung in der erfindungsgemäßen Interferometeranordnung. Beispielsweise können alternativ zu den Brechungsindizes $n_M$ und $n_R$ auch andere Parameter, die die Brechungsindexfluktuationen beschreiben, von der ersten Prozessoreinheit 63 an die Korrektureinheit 66 übergeben werden.

### 2. Ausführungsbeispiel

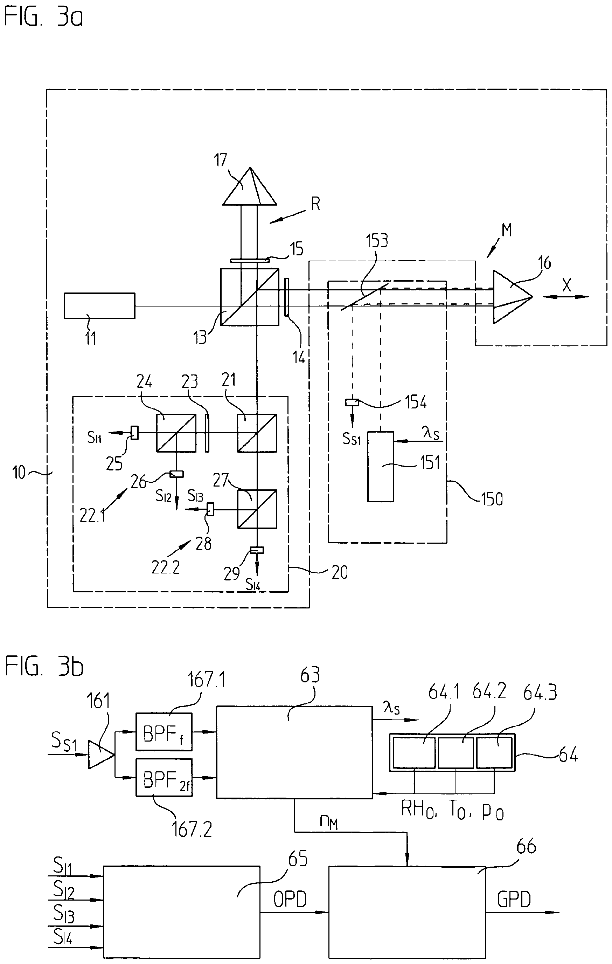

Ein zweites Ausführungsbeispiel einer erfindungsgemäßen Interferometeranordnung sei nachfolgend anhand der Figuren 3a und 3b erläutert. Figur 3a zeigt wiederum den Strahlengang derselben, anhand von Figur 3b sei die Signalverarbeitung in dieser Variante erklärt. Beim Beispiel der Figuren 3a und 3b handelt es sich im übrigen um eine Variante, die im obigen Theorieteil als "spektral integrierter Fall" bezeichnet wurde.

Der optische Aufbau des Interferometers 10 entspricht auch in dieser Variante i.w. demjenigen aus dem vorher erläuterten Ausführungsbeispiel in der Figur 2a; auf eine nochmalige detaillierte Beschreibung desselbigen sei deshalb verzichtet.

Als geringfügiger Unterschied sei in Bezug auf das verwendete Interferometer 10 lediglich erwähnt, dass der Referenzarm R nunmehr sehr kurz gewählt ist, so dass insbesondere keine Erfassung und Korrektur des Brechungsindex $n_R$ im Referenzarm R erforderlich ist.

Als Erfassungsmittel zur Erfassung von Fluktuationen des Brechungsindexes $n_M$ der Luft im Messarm M des Interferometers 10 ist wiederum eine Spektrometereinheit 150 vorgesehen. Diese enthält erneut eine Spektrometer-Lichtquelle 151, die Strahlenbündel mit der Wellenlänge $\lambda_S$ emittiert. Die emittierten Strahlenbündel werden im Messarm M des Interferometers 10 über ein Strahlteilerelement 153, ausgebildet als dichroitischer Strahlteiler, dem Messarm-Teilstrahlenbündel des Interferometers 10 überlagert. Die Überlagerung der Strahlenbündel aus der Spektrometer-Lichtquelle 151 mit dem Messarm-Teilstrahlenbündel der Interferometer-Lichtquelle 11 erfolgt in diesem Beispiel demzufolge erst nach dem ersten Interferometer-Strahlteilerelement 13. Nach dem Rückreflektieren des Strahlenbündels der Spektrometer-Lichtquelle 151 über das Retroreflektorelement 16 spaltet das Strahlteilerelement 153 dieses Strahlenbündel wieder aus dem Teilstrahlenbündel der Interferometer-Lichtquelle 11 ab und leitet dieses in Richtung eines Spektrometer-Detektorelements 154. Das Spektrometer-Detektorelement 154 liefert wiederum ein Spektrometersignal $S_{S1}$ bzgl. der Absorption der Wellenlänge $\lambda_S$ im jeweiligen Luftbestandteil $\epsilon$.

In diesem Ausführungsbeispiel verlaufen die Strahlrichtungen des Interferometers 10 und der Spektrometereinheit 150 demzufolge gegenläufig zueinander, d.h. antikollinear. Als Vorteil dieser Variante ist anzuführen, dass keine speziellen polarisationsoptischen Bauelemente für die beiden Wellenlängen $\lambda_S$ und $\lambda_I$, erforderlich sind. Ferner kann die komplette Optik der Spektrometereinheit 150 einschließlich des Strahlteilerelements 152 wie in der Figur schematisch angedeutet in einer getrennten Einheit untergebracht werden. Diese Einheit sollte aber grds. möglichst nahe am ersten Interferometer-Strahlteilerelement 13 angeordnet werden, um eine erfindungsgemäße Erfassung des Brechungsindex $n_M$ im möglichst vollständigen Messarm M sicherzustellen und unkompensierte Luftwege zu vermeiden.

Grundsätzlich wäre es natürlich zur Steigerung der Genauigkeit der Brechungsindex-Erfassung möglich, eine entsprechende Spektrometereinheit zusätzlich auch im Referenzarm R des Interferometers 10 anzuordnen, insbesondere wenn dieser etwas länger sein sollte.

Die Signalverarbeitung der zweiten Ausführungsform der erfindungsgemäßen Interferometeranordnung sei anhand der schematischen Darstellung in Figur 3b erläutert; Komponenten mit gleichen Funktionalitäten wie im Beispiel der Figur 2a sind hierbei mit identischen Bezugszeichen versehen.

Die Verarbeitung der Interferometersignale $S_{I1}$, $S_{I2}$, $S_{I3}$, $S_{I4}$ erfolgt wie im ersten Beispiel über die zweite Prozessoreinheit 65, an deren Ausgang ein Signal OPD bzgl. der optischen Weglängendifferenz im Interferometer zur Weiterverarbeitung bereitgestellt wird.

Der ersten Prozessoreinheit 63 werden ebenfalls wieder wie im vorhergehenden Beispiel die Ausgangssignale $RH_0$, $T_0$, $p_0$ von schematisch angedeuteten Brechungsindex-Bestimmungsmitteln 64 bzw. den entsprechenden Sensoren 64.1, 64.1, 64.3 zugeführt.

Desweiteren wird über die erste Prozessoreinheit 63 die Wellenlänge $\lambda_S$ der Spektrometer-Lichtquelle 151 mit der Frequenz f sehr schnell moduliert; die Frequenz f beträgt in einer möglichen Ausführungsform etwa f = 200kHz, allgemein liegt die Frequenz f im Bereich zwischen 10kHz und 10MHz. Es resultiert aufgrund dieser Modulation ein entsprechend schnell moduliertes Spektrometersignal $S_{S1}$. Das Spektrometersignal $S_{S1}$ wird über ein Verstärkerelement 161 verstärkt und zwei Bandpassfiltern 167.1, 167.2 zugeführt. Die beiden Bandpassfilter besitzen die in der Figur angedeuteten Durchlassfrequenzen f bzw. 2f. Den Bandpassfiltern 167.1, 167.2 ist die erste Prozessoreinheit nachgeordnet, die aus den verstärkten und bandpassgefilterten Spektrometersignalen $S_{S1}$ mit Hilfe eines Lock-in-Verstärkers Amplituden und Phasenlagen dieser Signale bestimmt. Die Signalamplitude bei der 2. Harmonischen 2f enthält hierbei die über die Absorptionslinie spektral gemittelte Transmission im jeweiligen Luftbestandteil $\epsilon$, da in jeder Modulationsperiode das Absorptionsmaximum zweimal durchlaufen wird. Die Differenzbildung aus Signalpegeln im Absorptionsmaximum und außerhalb der Spektrallinie zur Kompensation unerwünschter Signaleinflüsse, wie sie im ersten Ausführungsbeispiel erläutert wurde, erfolgt hier automatisch, da nur die Amplituden der Spektrometersignale $S_{S1}$, nicht aber deren Offset detektiert werden. Durch die analoge Mittelung entfällt in dieser Ausführungsform eine ansonsten nötige rechenintensive numerische Integration, wie sie etwa im ersten Ausführungsbeispiel nötig ist. Im zweiten Ausführungsbeispiel ist daher ein Betrieb der Spektrometer-Lichtquelle 151 mit einer deutlich höheren Modulations- bzw. Durchstimmfrequenz f möglich, wodurch insbesondere eine höhere Genauigkeit des Verfahrens erreicht werden kann. Die Amplitude und Phasenlage bei der Grundwelle f wird einer Offsetregelung für die Wellenlänge $\lambda_S$ zugeführt. Nur wenn die Absorptionslinie mittig zur Wellenlängenmodulation liegt, ist diese Amplitude minimal. Verschiebt sich der Offset der Wellenlängenmodulation über die Absorptionslinie hinweg, so ändert sich die Phase der Grundwelle f des Spektrometersignals $S_{S1}$ um 180°, was zur Offsetregelung herangezogen werden kann. In Bezug auf das Auswerteverfahren dieser Ausführungsform sei etwa auf die Veröffentlichung "Digital phase sensitive detection for in-situ diode-laser spectroscopy under rapidly changing transmission conditions", T. Fernholz et. al., Appl. Phys. B 75, 229-236, (2002) verwiesen.

### 3. Ausführungsbeispiel

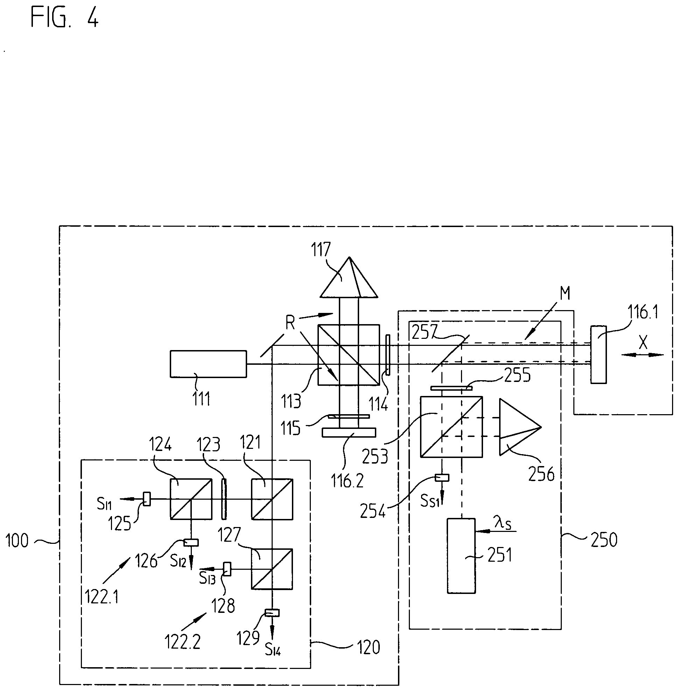

Ein drittes Ausführungsbeispiel einer erfindungsgemäßen Interferometeranordnung sei nachfolgend anhand der Figur 4 erläutert; da hierbei grds. eine Signalverarbeitung wie in den ersten beiden Beispielen erfolgen kann, wird auf eine separate Erläuterung derselben verzichtet. Im Fall des dritten Ausführungsbeispiels handelt es sich im Unterschied zum zweiten Beispiel nunmehr wieder um eine spektral selektive Variante.

Als weiterer Unterschied zu den beiden vorher erläuterten Beispielen ist in dieser Ausführungsform einer erfindungsgemäßen Interferometeranordnung das Interferometer 100 nunmehr als sog. Planspiegelinterferometer ausgebildet, wie es grundsätzlich aus dem Stand der Technik bekannt ist.

Hierbei wird ein von der Interferometer-Lichtquelle 111 emittiertes Strahlenbündel einem ersten Interferometer-Strahlteilerelement 113 zugeführt, das als polarisierenden Strahlteilerwürfel ausgebildet ist. Über das Interferometer-Strahlteilerelement 113 wird das einfallende Strahlenbündel in einen Messstrahl und einen Referenzstrahl aufgespalten. Das Teilstrahlenbündel des Messstrahls durchläuft im Messarm M eine $\lambda$/4-Platte 114, wird an einem ersten Planspiegel-Reflektorelement 116.1 reflektiert und tritt dann erneut durch die $\lambda$/4-Platte 114. In analoger Weise wird das Teilstrahlenbündel des Referenzstrahls über die $\lambda$/4-Platte 115 auf ein zweites Planspiegel-Reflektorelement 116.2 und anschließend wiederum durch die $\lambda$/4-Platte 115 gelenkt. Beide Teilstrahlenbündel werden im Interferometer-Strahlteilerelement 113 überlagert, wobei die beiden Teilstrahlenbündel orthogonal zueinander polarisiert sind. Beide Teilstrahlenbündel gelangen auf das Retroreflektorelement 117, das als Tripelprisma ausgebildet ist, werden dort zurückreflektiert und aufgrund ihrer unterschiedlichen Polarisation im Interferometer-Strahlteilerelement 113 wieder aufgespalten. Nach erneutem Durchlauf der $\lambda$/4-Platte 114, dem ersten Planspiegel-Reflektorelement 116.1 und der $\lambda$/4-Platte 114 bzw. der $\lambda$/4-Platte 115, dem zweiten Planspiegel-Reflektorelement 116.2 und der $\lambda$/4-Platte 115 werden die Teilstrahlenbündel im Interferometer-Strahlteilerelement 113 schließlich wieder überlagert und der Detektoreinheit 120 zur Erzeugung der vier phasenverschobenen Interferometersignale $S_{I1}$,...$S_{I4}$ in bekannter Art und Weise zugeleitet. Das erste Planspiegel-Reflektorelement 116.1 stellt in diesem Beispiel den Messreflektor dar, dessen Lage entlang der Messrichtung x gemessen werden soll.

Die Spektrometereinheit 250 dieser Ausführungsform umfasst eine Spektrometer-Lichtquelle 251, die ein linear polarisiertes Strahlenbündel derart einem Spektrometer-Strahlteilerelement 253, ausgebildet als polarisierender Strahlteilerwürfel, zuleitet, dass dieses Strahlenbündel ausschließlich transmittiert wird. Es durchläuft eine $\lambda$/4-Platte 255 und wird über ein Strahlteilerelement 257 im Messarm M des Interferometers 100 kollinear zum Interferometer-Strahlenbündel gelenkt. Das Strahlteilerelement 257 ist etwa als dichroitischer Strahlteiler ausgebildet.

Nach der Reflexion am Planspiegel-Reflektorelement 116.1 und am Strahlteilerelement 257 gelangt das Spektrometer-Strahlenbündel wieder auf die $\lambda$/4-Platte 255 und wird deshalb vom Spektrometer-Strahlteilerelement 253, das als polarisierender Strahlteilerwürfel ausgebildet ist, reflektiert. Ein Retroreflektorelement 256 reflektiert das Spektrometer-Strahlenbündel versetzt zurück, so dass es am Spektrometer-Strahlteilerelement 253 wieder reflektiert wird. Es gelangt erneut über die Komponenten 255, 257, 116.1, 257 und 255 auf das Spektrometer-Strahlteilerelement 253, welches das Spektrometer-Strahlenbündel aufgrund der gedrehten Polarisation dann transmittiert. Es wird schließlich vom Spektrometer-Detektorelement 254 erfasst, das ein entsprechendes Spektrometersignal $S_{S1}$ liefert. Der Strahlversatz des Retroreflektorelements 256 ist so gewählt, dass die überlagerten Strahlenbündel des Interferometers 100 und der Spektrometereinheit 250 zwischen dem Planspiegel-Reflektorelement 116.1 und dem Strahlteilerelement 257 kollinear verlaufen.

In diesem Ausführungsbeispiel sind alle polarisationsoptischen Bauteile jeweils nur für eine Wellenlänge $\lambda_I$ oder $\lambda_S$ ausgelegt, was die Herstellung stark vereinfacht. Wiederum kann die Spektrometereinheit 250 als getrennte Baueinheit ausgelegt werden.

Die Signalauswertung kann wie in der ersten oder zweiten Ausführungsform der erfindungsgemäßen Interferometeranordnung erfolgen. Alternativ kann die Wellenlänge der Spektrometereinheit auf das Absorptionsmaximum der jeweiligen Absorptionslinie geregelt werden. Entsprechende Regelungsverfahren sind aus der Literatur bekannt.

## 4. Ausführungsbeispiel

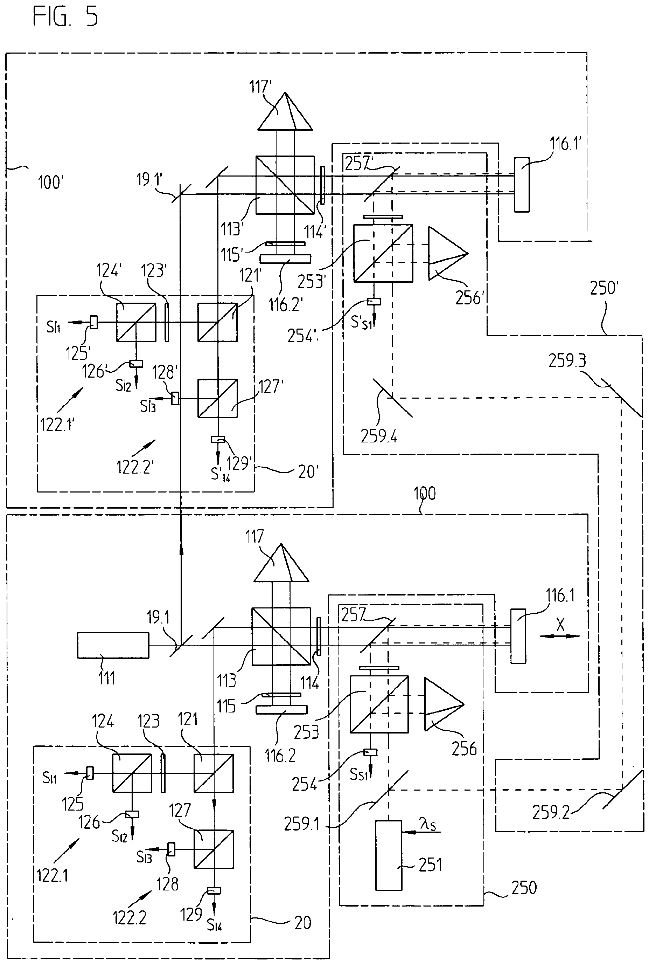

Ein viertes Ausführungsbeispiel einer erfindungsgemäßen Interferometeranordnung sei nachfolgend anhand der Figur 5 erläutert, die wiederum eine schematisierte Darstellung der verschiedenen Strahlengänge zeigt.

Im Prinzip basiert das vierte Ausführungsbeispiel auf dem vorher erläuterten dritten Ausführungsbeispiel einer erfindungsgemäßen Interferometeranordnung. So ist in dieser Variante neben der im unteren Teil der Figur 5 gezeigten Interferometeranordnung 100 gemäß Figur 4 im oberen Teil nochmals eine identische derartige Interferometeranordnung 100' gemäß dem dritten Ausführungsbeispiel vorgesehen. Das vierte Ausführungsbeispiel umfasst demzufolge zwei Interferometeranordnungen 100, 100' gemäß dem dritten Ausführungsbeispiel.

Ebenso sind in dieser Variante natürlich zwei den Interferometern 100, 100' zugeordnete Spektrometereinheiten 250, 250' vorgesehen, die wie im vorherigen dritten Ausführungsbeispiel aufgebaut sind.

Es werden in der Figur 5 daher im unteren Teil die gleichen Bezugszeichen für die verschiedenen Komponenten des Interferometers 100 bzw. der Spektrometereinheit 250 mit identischer Funktion wie im dritten Ausführungsbeispiel verwendet, im oberen Teil sind die entsprechenden Komponenten mit dem Vermerk "'" versehen.

Sowohl die Interferometer 100, 100' als auch die beiden jeweils zugeordneten Spektrometereinheiten 250, 250' werden beide von der gleichen Interferometer-Lichtquelle 111 bzw. Spektrometer-Lichtquelle 251 gespeist. Über die zusätzlichen Strahlteilerelemente 19.1, 259.1 werden jeweils Strahlenbündel zur Versorgung des zusätzlichen Interferometers 100' bzw. der zusätzlichen Spektrometereinheit 250' aus den Strahlenbündeln der Interferometer-Lichtquelle 111 bzw. Spektrometer-Lichtquelle 251 abgespalten und über weitere Umlenkelemente 19.2 bzw. 259.2, 259.3, 259. 4 den zusätzlichen Einheiten 100', 250' zugeführt.

Die Interferometeranordnung im unteren Teil der Figur 5 mit dem Interferometer 100 und der Spektrometereinheit 250 dient in diesem Beispiel als eigentliche Mess-Anordnung, die Interferometeranordnung im oberen Teil der Figur 5 mit dem Interferometer 100' und der Spektrometereinheit 250' fungiert als Kalibrier-Anordnung. Das Interferometer 100' der Kalibrieranordnung weist eine feste, nach Möglichkeit bekannte Messstrecke auf, d.h. das Planspiegel-Reflektorelement 116.1' bewegt sich nicht entlang der Messstrecke. Über die Kalibrieranordnung können dann die Koeffizienten $\alpha_{\varepsilon0}$, $\beta_{\varepsilon}$ bzw. $\alpha'_{\alpha0}$, $\beta'_{\varepsilon}$ aus Gleichung 18a bzw. 18b kalibriert werden und damit auch Veränderungen der Luftzusammensetzung ausgeglichen werden. Dazu werden anhand der Gleichungen 2, 3 und 18a bzw. 18b durch eine lineare Ausgleichsrechnung die Koeffizienten $\alpha_{\varepsilon0}$, $\beta_{\varepsilon}$ bzw. $\alpha'_{\alpha0}$, $\beta'_{\varepsilon}$ so bestimmt, dass die gemessene geometrische Weglängendifferenz GPD die kleinste quadratische Abweichung zur bekannten tatsächlichen geometrischen Weglängendifferenz des Kalibrierinterferometers hat.

## 5. Ausführungsbeispiel

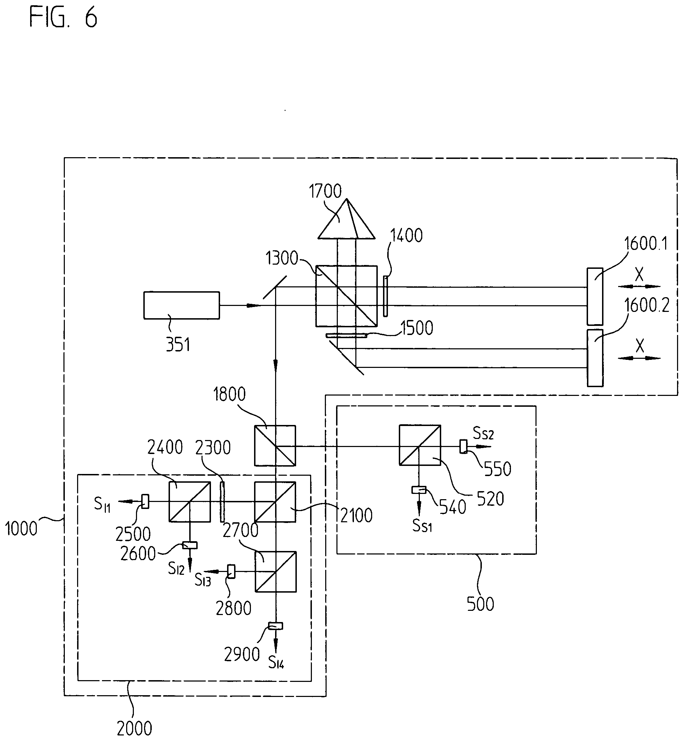

In Figur 6 ist der schematisierte Strahlengang einer fünften Ausführungsform einer erfindungsgemäßen Interferometeranordnung dargestellt. Es werden nachfolgend wiederum lediglich die maßgebenden Unterschiede zu den vorherigen Varianten erläutert.

So umfasst die erfindungsgemäße Interferometeranordnung nunmehr eine kombinierte Interferometer/Spektrometereinheit-Anordnung, die von der gleichen bzw. einer gemeinsamen Lichtquelle 351 gespeist wird. Das bedeutet, dass die Lichtquelle 351 in diesem Beispiel sowohl als Interferometer-Lichtquelle wie auch als Spektrometer-Lichtquelle fungiert. Die Wellenlänge $\lambda_I = \lambda_S$ der Lichtquelle 351 ist wiederum im Bereich der Absorptionslinie eines Luftbestandteils $\varepsilon$ gewählt.

Über diese Lichtquelle 351 wird zum einen ein Interferometer 1000 gespeist, das als Differentialplanspiegelinterferometer ausgebildet und ähnlich wie das Interferometer der vierten Ausführungsform aufgebaut ist. Im Unterschied hierzu ist lediglich vorgesehen, dass der Planspiegel-Referenzreflektor 1600.2 ebenfalls in Messrichtung x bewegt werden kann.

Das aus dem ersten Interferometer-Strahlteilerelement 1300, ausgebildet als polarisierender Strahlteilerwürfel, in Richtung des zweiten Interferometer-Strahlteilerelements 1800 austretende Strahlenbündel enthält die beiden Teilstrahlenbündel der Messstrecke und der Referenzstrecke mit zueinander orthogonalen Polarisationen. Über das zweite Interferometer-Strahlteilerelement 1800, ausgebildet als nicht-polarisierender Strahlteiler, wird ein Teil dieses Lichtbündels für die Detektion der Absorption in der Spektrometer-Detektoreinheit 500 abgezweigt und einem Spektrometer-Strahlteilerelement 520, ausgebildet als polarisierender Strahlteilerwürfel, zugeführt. Die beiden Teilstrahlenbündel werden demzufolge getrennt auf die Spektrometer-Detektorelemente 540, 550 gelenkt und können nicht miteinander interferieren. Über das Spektrometer-Detektorelement 550 kann damit die Absorption im Messarm M des Interferometers 1000 gemessen werden und über das Spektrometer-Detektorelement 540 die Absorption im Referenzarm R des Interferometers 1000.

Über die Interferometer-Detektorelemente 2500, 2600, 2800, 2900 wird wie in der ersten Ausführungsform zunächst eine Phasenverschiebung des Interferometers 1000 bestimmt. Die Wellenlänge $\lambda_I=\lambda_S$ der Lichtquelle 351 ist im Bereich einer Absorptionslinie durchstimmbar. Das Durchstimmen erfolgt vorzugsweise mit einer hohen Modulationsfrequenz f. Die Interferometerphase wird durch diese Wellenlängenmodulation ebenfalls moduliert. Durch eine Mittelung $<\Phi_S(\lambda_S)>$ der Interferometerphase über eine Modulationsperiode oder durch eine synchrone Abtastung zu immer denselben Abtastzeitpunkten innerhalb der Modulationsperiode erhält man stabile Phasenwerte für die Positionsmessung, die nicht mehr von der Wellenlängenmodulation beeinflusst werden.

Durch eine Regelung der Mittenwellenlänge der gemeinsamen Lichtquelle 351 anhand der Absorptionsmessung erfolgt automatisch eine Stabilisierung der Lichtquellenwellenlänge $\lambda_I=\lambda_S$ auf die Absorptionslinie. Dies ist insbesondere bei Verwendung eines Halbleiterlasers als Lichtquelle 351 vorteilhaft. Eine aufwändige z.B. mit Rubidium gefüllte Gaszelle als Frequenz- bzw. Wellenlängennormal kann hier entfallen, da stattdessen ein Luftbestandteil $\varepsilon$ im Mess- bzw. Referenzarm M, R verwendet wird. Durch die gemeinsame Verwendung der Lichtquelle 351 und eines Großteils der Interferometerkomponenten für die Längenmessung und die Absorptionsmessung ist dieses Ausführungsbeispiel zudem besonders einfach und damit kostengünstig aufzubauen.

## 6. Ausführungsbeispiel

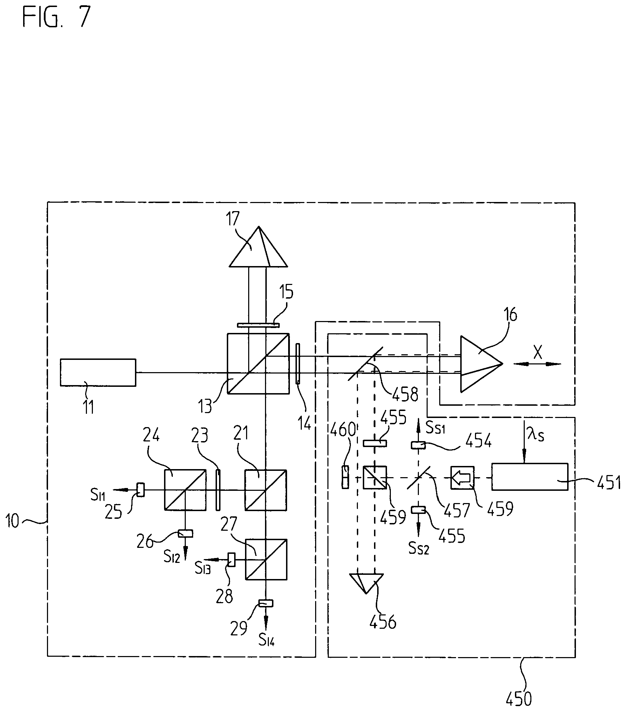

Ein sechstes Ausführungsbeispiel einer erfindungsgemäßen Interferometeranordnung sei abschließend anhand der Darstellung in Figur 7 erläutert. Wiederum wird in der nachfolgenden Beschreibung nur auf die maßgeblichen Unterschiede zu den vorherigen Varianten eingegangen.

Der Aufbau des in diesem Beispiel eingesetzten Interferometers 10 ist hierbei identisch zu demjenigen aus den Figuren 2a oder 3a, weshalb auf eine detaillierte Beschreibung desselben verzichtet wird. Unterschiedlich zu den vorhergehenden Varianten ist die Spektrometereinheit 450 dieses Ausführungsbeispiels ausgebildet, die nachfolgend erläutert sei.

Das Strahlenbündel der Spektrometer-Lichtquelle 451 durchläuft ein optisches Isolatorelement 459, das eine Rückreflexion von Streulicht in den Resonator der Spektrometer-Lichtquelle 451 verhindert. Auf diese Weise kann die Spektrometer-Lichtquelle 451 stabiler betrieben werden. Das Strahlenbündel der Spektrometer-Lichtquelle 451 wird nachfolgend am Strahlteilerelement 457 aufgeteilt. Ein reflektiertes Teilstrahlenbündel wird von einem Spektrometer-Detektorelement 455 detektiert und liefert als Referenzsignal das Spektrometersignal $S_{S2}$, welches ein Maß für die Leistung der Spektrometer-Lichtquelle 451 darstellt. Das transmittierte Teilstrahlenbündel der Spektrometer-Lichtquelle 451 trifft auf ein Spektrometer-Strahlteilerelement 453, ausgebildet als polarisierender Strahlteilerwürfel. Die lineare Polarisation des einfallenden Teilstrahlenbündels ist dabei so gewählt, dass das Teilstrahlenbündel am polarisierenden Spektrometer-Strahlteilerelement 453 reflektiert wird. Anschließend durchläuft dieses Teilstrahlenbündel eine $\lambda/2$-Platte 455, die die lineare Polarisation dieses Teilstrahlenbündels um 90° dreht, und wird dann vom Strahlteilerelement 458, ausgebildet als dichroitischen Strahlteiler, reflektiert und mit dem Teilstrahlenbündel der Interferometer-Lichtquelle 11 antikollinear überlagert. Nach Retroreflexion am Retroreflektorelement 16 und erneuter Reflexion am Strahlteilerelement 458 gelangt das Teilstrahlenbündel auf das Retroreflektorelement 456 und wird dort ebenfalls retroreflektiert. Durch die Drehung der Polarisationsrichtung durchtritt das Spektrometer-Teilstrahlenbündel das polarisierende Spektrometer-Strahlteilerelement 453 ohne Ablenkung und gelangt über die Bauelemente 455, 458, 16, 458 und 456 erneut auf das polarisierende Spektrometer-Strahlteilerelement 453. Durch die erneute Drehung der Polarisationsrichtung durch die $\lambda/2$-Platte 455 wird das Teilstrahlenbündel am Spektrometer-Strahlteilerelement 453 nunmehr reflektiert und gelangt auf den Spiegle bzw. das Retroreflektorelement 460, wo eine Rückreflexion in Richtung Spektrometer-Strahlteilerelement 453 erfolgt. Danach reflektiert das polarisierende Spektrometer-Strahlteilerelement 453 erneut das Teilstrahlenbündel, so dass die Strahlrichtung umgedreht wird und das Teilstrahlenbündel die Bauelemente 456, 458, 16, 458, 455, 453, 456, 458, 16, 458, 455 durchläuft. Vom polarisierenden Spektrometer-Strahlteilerelement 453 wird das Teilstrahlenbündel dann reflektiert und gelangt über das Strahlteilerelement 457 auf das Spektrometer-Detektorelement 454, welches das Spektrometersignal $S_{S1}$ erzeugt.

Die Messstrecke zwischen dem Strahlteilerelement 458 und dem als Messreflektor fungierenden Retroreflektorelement 16 wird aufgrund der verschiedenen optischen Elemente im Strahlengang der Spektrometereinheit 450 in dieser Anordnung insgesamt viermal hin und zurück durchlaufen. Das Spektrometersignal $S_{S1}$ misst deshalb viermal höhere Absorptionseffekte als im ersten Ausführungsbeispiel, was die Messgenauigkeit erheblich vergrößert. In dieser Ausführungsform wird auswerteseitig das Spektrometersignal $S_{S1}$ durch das als Referenzsignal fungierende Spektrometersignal $S_{S2}$ dividiert. Dadurch werden Schwankungen der Leistung der Spektrometer-Lichtquelle 451 während der Modulation der Spektrometer-Wellenlänge $\lambda_S$ kompensiert, so dass das resultierende Signal $S = S_{S1}/S_{S2}$ nur von der Luftabsorption bestimmt wird.

Im Rahmen der vorliegenden Erfindung existieren neben den konkret beschriebenen Ausführungsbeispielen selbstverständlich auch noch alternative Ausgestaltungsmöglichkeiten.

Als Modifikation der oben beschriebenen Ausführungsformen ist es insbesondere möglich, statt den beschriebenen Homodyn-Interferometern auch Heterodyn-Interferometer einzusetzen. Des soll nachfolgend kurz anhand des Beispiels aus Figur 3a erläutert werden. Die Interferometer-Lichtquelle 11 sendet in diesem Fall zwei kollineare Strahlenbündel mit etwas unterschiedlichen Wellenlängen aus, die zueinander orthogonal polarisiert sind. Die Polarisationsachsen der verwendeten Interferometer-Lichtquelle 11 werden so zu den Polarisationsachsen des Interferometer-Strahlteilerelements 13 des Interferometers eingestellt, dass das eine Strahlenbündel mit der ersten Wellenlänge in den Messarm M geleitet wird und das andere in den Referenzarm R. Die Interferometer-Detektionseinheit 20 enthält in diesem Fall nur mehr einen Detektor mit davor angeordnetem Polarisator, der das vom Interferometer-Strahlteilerelement 13 zugeleitete Strahlenbündel detektiert. Das vom Detektor gelieferte Signal ist aufgrund der Interferenz der beiden Wellenlängenkomponenten der Interferometer-Lichtquelle 11 moduliert. Die Phase dieser Modulation wird in einer entsprechend angepassten zweiten Prozessoreinheit 65 in bekannter Art und Weise ausgewertet und liefert die optische Weglängendifferenz OPD. Der Aufbau der Spektrometereinheit bleibt hiervon unbeeinflusst.

Weiterhin ist es möglich, neben den erläuterten Interferometer-Typen innerhalb der erfindungsgemäßen Interferometeranordnung auch andere Interferometer-Typen einzusetzen, beispielsweise Mach-Zehnder-Interferometer, Gitterinterferometer, Winkelinterferometer und Speckle-Interferometer. Insbesondere können auch Gitterencoder mit großem Abtastabstand verwendet werden.

Darüberhinaus lassen sich die erfindungsgemäßen Maßnahmen, also insbesondere das Vorsehen der Spektrometereinheit, auch in Verbindung mit abbildenden Interferometern einsetzen (z.B. Fizeau, Twyman-Green, ...), bei denen ein oder mehrere Kamerasensoren ortsaufgelöste Längeninformationen liefern. Vorteilhaft ist es, wenn nicht nur das Interferometer sondern auch die Spektrometereinheit mit solchen ortsauflösenden Kamerasensoren ausgerüstet wird. Damit kann jeder Pixelwert des Interferometers individuell durch die Auswertung von zugehörigen Pixelwerten der Spektrometereinheit erfindungsgemäß korrigiert werden. Die erläuterte fünfte Ausführungsform ist hierbei besonders vorteilhaft, da die selbe Lichtquelle für das Interferometer und die Spektrometereinheit verwendet wird.

Die erfindungsgemäße Kompensation von Brechungsindexschwankungen der Luft durch eine Absorptionsmessung mindestens eines Luftbestandteils in den mindestens zwei Strahlwegen einer auf Interferenz basierenden optischen Anordnung lässt sich grundsätzlich auf jede solche Anordnung übertragen.

Desweiteren ist es möglich, eine Spektrometer-Lichtquelle mit einer spektralen Breite zu verwenden, die etwas größer als die der genutzten Absorptionslinie ist. In diesem Fall erfolgt automatisch eine Mittelung über die spektrale Breite.

Statt der relativ aufwändigen Kalibrieranordnung gemäß der vierten Ausführungsform können Referenzmessungen durch Anfahren von Referenzpunkten entlang der Messstrecke durchgeführt werden. Die Referenzpunkte werden durch Signale zusätzlicher Referenzsensoren (z.B. kapazitiver oder optischer Nullpunktsensoren) angezeigt. Letztlich werden mit dieser Information wiederum die Koeffizienten $\alpha_{\varepsilon 0}$, $\beta_{\varepsilon}$ bzw. $\alpha'_{\varepsilon 0}$, $\beta'_{\varepsilon}$ bestimmt.

Ferner ist es möglich, eine Faserzuführung für die Lichtquellen des Interferometers und/der der Spektrometereinheit vorzusehen, um die Wärmeentwicklung gering zu halten und eine einfache Installation zu ermöglichen.

Es kann z.B. weiterhin vorgesehen werden, die Strahlenbündel der Interferometer- und oder der Spektrometer-Lichtquellen auf mehrere Interferometerachsen bzw. zugehörige Spektrometereinheiten zu verteilen, um den erforderlichen Aufwand zu minimieren.

Zudem können auch weitere Modulationsverfahren zur Regelung der Mittenwellenlänge eingesetzt werden, wie dies etwa in der Veröffentlichung "Development of an IR tunable diode laser absorption spectrometer for trace humidity measurements at atmospheric pressure", Chr. S. Edwards et al, Appl. Optics 38, No. 21, 20.7.1999 beschrieben ist.

**Patentansprüche**

1. Interferometeranordnung, bestehend aus

- einem Interferometer (10; 100; 1000; 1000') mit einer InterferometerLichtquelle (11; 111; 351), deren emittierte Strahlung in einen Mess- und einen Referenzarm (M, R) aufteilbar ist, wobei ein Messobjekt im Messarm (M) angeordnet ist und das Interferometer (10; 100; 1000; 1000') von der Position des Messobjekts abhängige Interferometersignale ($S_{I1}$ - $S_{I4}$) liefert sowie
- Erfassungsmitteln zur Erfassung von Fluktuationen des Brechungsindexes der Luft im Mess- und/oder Referenzarm (M, R),

**dadurch gekennzeichnet,**
**dass** die Erfassungsmittel eine Spektrometereinheit (50; 150; 250; 250'; 450) umfassen, wobei die Spektrometereinheit (50; 150; 250; 250'; 450) mindestens folgende Komponenten aufweist:

- eine Spektrometer-Lichtquelle (51; 151; 251; 351; 451), deren emittierte Strahlenbündel den Strahlenbündeln der Interferometer-Lichtquelle (11; 111; 351) überlagert sind und die Spektrometer-Lichtquelle (51; 151; 251; 351; 451) Strahlung mit einer Wellenlänge ($\lambda_S$) emittiert, die im Bereich einer Absorptionslinie mindestens eines bestimmten Luftbestandteils ($\varepsilon$) liegt,
- mindestens eine Spektrometer-Detektoreinheit (52; 520) zur Erzeugung von Spektrometersignalen ($S_{S1}$, $S_{S2}$), die die Absorption des Luftbestandteils ($\varepsilon$) bzgl. der Spektrometer-Lichtquellenwellenlänge ($\lambda_S$) im Mess- und/oder Referenzarm (M, R) charakterisieren.

2. Interferometeranordnung nach Anspruch 1, **dadurch gekennzeichnet, dass** die Erfassungsmittel ferner Brechungsindex-Bestimmungsmittel (64) umfassen, die zur Bestimmung des nominellen Brechungsindexes $n(T_0, p_0, RH_0)$ der Luft im Bereich des Mess- und/oder Referenzarms (M, R) dienen.

3. Interferometeranordnung nach Anspruch 1, **gekennzeichnet durch** eine erste Prozessoreinheit (63), an der eingangsseitig die Spektrometersignale ($S_{S1}$, $S_{S2}$) der Spektrometereinheit (50; 150; 250; 250'; 450) anliegen, wobei die Prozessoreinheit (PS) dazu ausgebildet ist, aus den anliegenden Spektrometersignalen ($S_{S1}$, $S_{S2}$) die Fluktuationen des Brechungsindexes der Luft im Mess- und/oder Referenzarm (M, R) zu bestimmen und entsprechende Ausgangssignale ($n_M$, $n_R$) der ersten Prozessoreinheit (63) zur Weiterverarbeitung bereitzustellen.

4. Interferometeranordnung nach Anspruch 2 und 3, **dadurch gekennzeichnet, dass** an der ersten Prozessoreinheit (63) zusätzlich die Ausgangssignale ($RH_0$, $T_0$, $p_0$) der Brechungsindex-Bestimmungsmittel (64) anliegen und die erste Prozessoreinheit (63) dazu ausgebildet ist, aus den anliegenden Signalen ($S_{S1}$, $S_{S2}$; $RH_0$, $T_0$, $p_0$) den mittleren Brechungsindex ($n_M$, $n_R$) im Bereich des Mess- und/oder Referenzarms (M, R) zu bestimmen und entsprechende Ausgangssignale ($n_M$, $n_R$) der ersten Prozessoreinheit (63) zur Weiterverarbeitung bereitzustellen.

5. Interferometeranordnung nach Anspruch 3 oder 4, **gekennzeichnet durch** eine Korrektureinheit (66), an der eingangsseitig die Ausgangssignale ($n_M$, $n_R$) der ersten Prozessoreinheit (63) bzgl. des Brechungsindexes im Mess- und/oder Referenzarm (M, R) sowie die Ausgangssignale einer zweiten Prozessoreinheit (65) bzgl. der optischen Weglängendifferenz (OPD) anliegen, die aus den anliegenden Interferometersignalen ($S_{I1}$ - $S_{I4}$) von der zweiten Prozessoreinheit (65) bestimmt wird, wobei die Korrektureinheit (66) dazu ausgebildet ist, aus den Ausgangssignalen ($n_M$, $n_R$) der ersten Prozessoreinheit (63) bzgl. des Brechungsindex im Mess- und/oder Referenzarm (M, R) einen effektiven Brechungsindex ($n_{eff}$) zu bestimmen und diesen in Verbindung mit der optischen Weglängendifferenz (OPD) zu verarbeiten und ausgangsseitig korrigierte Positionssignale (GPD) bzgl. der Position des Messobjekts im Messarm (M) bereitzustellen.

6. Interferometeranordnung nach Anspruch 3 oder 4, **dadurch gekennzeichnet, dass** die erste Prozessoreinheit (63) dazu ausgebildet ist, die Wellenlänge ($\lambda_S$) der Spektrometer-Lichtquelle (51; 151; 251; 351; 451) im Bereich mindestens einer Absorptionslinie mindestens eines Luftbestandteils ($\varepsilon$) durchzustimmen, dessen Absorptionscharakteristik bestimmt wird.

7. Interferometeranordnung nach Anspruch 3 oder 4, **dadurch gekennzeichnet, dass** die erste Prozessoreinheit (63) dazu ausgebildet ist, ein Fabry-Perot-Interferometer im Bereich mindestens einer Absorptionslinie mindestens eines Luftbestandteils ($\varepsilon$) durchzustimmen, dessen Absorptionscharakteristik bestimmt wird, wobei das Fabry-Perot-Interferometer auf Seiten der Spektrometer-Detektoreinheit (52; 520) angeordnet ist.

8. Interferometeranordnung nach Anspruch 6 oder 7, **dadurch gekennzeichnet, dass** die erste Prozessoreinheit (63) dazu ausgebildet ist, eine Mitten-Wellenlänge des Durchstimmbereichs der Spektrometer-Lichtquelle (51; 151; 251; 351; 451) so zu regeln oder das Fabry-Perot-Interferometer so durchzustimmen, dass sie in einem festen Abstand zum Absorptionsmaximum desjenigen Luftbestandteils ($\varepsilon$) steht, dessen Absorptionscharakteristik bestimmt wird.

9. Interferometeranordnung nach mindestens einem der Ansprüche 1 - 8, **dadurch gekennzeichnet, dass** das Interferometer (10; 100; 1000; 1000') und die Spektrometereinheit (50; 150; 250; 250'; 450) eine gemeinsame Lichtquelle aufweisen.

10. Interferometeranordnung nach Anspruch 1, **dadurch gekennzeichnet, dass** im Strahlengang der Spektrometereinheit (50; 150; 250; 250'; 450) optische Elemente angeordnet sind, die das Strahlenbündel der Spektrometer-Lichtquelle (51; 151; 251; 351; 451) mehrfach entlang des Mess- und/oder Referenzarms (M, R) des Interferometers (10; 100; 1000; 1000') lenken.

11. Interferometeranordnung nach Anspruch 1, **dadurch gekennzeichnet, dass** die Wellenlänge ($\lambda_S$) der Spektrome-

ter-Lichtquelle (51; 151; 251; 351; 451) im Bereich mindestens einer Absorptionslinie mindestens einer der nachfolgenden Luftbestandteile ($\varepsilon$) liegt: $N_2$, $O_2$, $CO_2$, $H_2O$.

**12.** Interferometeranordnung nach Anspruch 1, **dadurch gekennzeichnet, dass** die spektrale Breite der Spektrometer-Lichtquelle (51; 151; 251; 351; 451) kleiner oder vergleichbar mit der spektralen Breite der Absorptionslinie ist.

**13.** Interferometeranordnung nach Anspruch 3 oder 4, **dadurch gekennzeichnet, dass** die erste Prozessoreinheit (63) aus den eingangsseitig anliegenden Spektrometersignalen ($S_{S1}$, $S_{S2}$) Absorptionsdifferenzwerte aus der Absorption im Zentrum der Absorptionslinie und der Absorption im Außenbereich der Absorptionslinie bildet, die dann zur Bestimmung des Brechungsindex verwendbar sind.

**14.** Interferometeranordnung nach Anspruch 1, **dadurch gekennzeichnet, dass** das Interferometer (10; 100; 1000; 1000') eine Interferometer-Detektoreinheit (20; 120; 2000) mit mehreren Interferometer-Detektorelementen (25, 26, 28, 29; 125, 126, 128, 129; 2500, 2600, 2800, 2900) zur Erzeugung mehrerer Positionssignale zu verschiedenen Messpunkten des mindestens einen Messobjekts aufweist und auch die Spektrometer-Detektoreinheit (52; 520) mehrere Spektrometer-Detektorelemente (54, 55; 154; 454, 455, 540, 550) zur Erfassung der Absorption des Luftbestandteils ($\varepsilon$) in den zugehörigen Mess- und/oder Referenzarmen (M, R) umfasst.

**15.** Interferometeranordnung nach Anspruch 1, **dadurch gekennzeichnet, dass** die Spektrometer-Lichtquelle (51; 151; 251; 351; 451) als DFB-Laser oder als External-Cavity-Laser ausgebildet ist.

**Claims**

**1.** Interferometer arrangement comprising

- an interferometer (10; 100; 1000; 1000') having an interferometer light source (11; 111; 351) whose emitted radiation can be divided into a measuring arm (M) and a reference arm (R), wherein an object to be measured is arranged in the measuring arm (M), and the interferometer (10; 100; 1000; 1000') supplies interferometer signals ($S_{I1}$-$S_{I4}$) which are dependent on the position of the object to be measured, and
- detection means for detecting fluctuations in the refractive index of the air in the measuring arm (M) and/or reference arm (R),

**characterized**
**in that** the detection means comprise a spectrometer unit (50; 150; 250; 250'; 450), wherein the spectrometer unit (50; 150; 250; 250'; 450) has at least the following components:

- a spectrometer light source (51; 151; 251; 351; 451) whose emitted beam bundles are superimposed on the beam bundles of the interferometer light source (11, 111; 351), and the spectrometer light source (51; 151; 251; 351; 451) emits radiation with a wavelength ($\lambda_S$) which is in the range of an absorption line of at least one determined air component ($\varepsilon$),
- at least one spectrometer detector unit (52; 520) for generating spectrometer signals ($S_{S1}$, $S_{S2}$) which characterize the absorption of the air component ($\varepsilon$) with respect to the spectrometer light source wavelength ($\lambda_S$) in the measuring arm (M) and/or reference arm (R).

**2.** Interferometer arrangement according to Claim 1, **characterized in that** the detection means also comprise refractive index-determining means (64) which serve to determine the nominal refractive index $n(T_0, p_0 RH_0)$ of the air in the region of the measuring arm (M) and/or reference arm (R).

**3.** Interferometer arrangement according to Claim 1, **characterized by** a first processor unit (63) at which the spectrometer signals ($S_{S1}$, $S_{S2}$) of the spectrometer unit (50; 150; 250; 250', 450) are present on the input side, wherein the processor unit (PS) is designed to determine fluctuations of the refractive index of the air in the measuring arm (M) and/or reference arm (R) from the spectrometer signals ($S_{S1}$, $S_{S2}$) which are present, and to make available corresponding output signals ($n_M$, $n_R$) to the first processor unit (63) for further processing.

**4.** Interferometer arrangement according to Claims 2 and 3, **characterized in that** the output signals ($RH_0$, $T_0$, $p_0$) of the refractive index-determining means (64) are additionally present at the first processor unit (63), and the first processor unit (63) is designed to determine the average refractive index ($n_M$, $n_R$) in the region of the measuring arm (M) and/or reference arm (R) from the signals ($S_{S1}$, $S_{S2}$, $RH_0$, $T_0$, $p_0$) which are present, and to make available corresponding output signals ($n_M$, $n_R$) to the first processor unit (63) for further processing.

5. Interferometer arrangement according to Claim 3 or 4, **characterized by** a correction unit (66) at which the output signals ($n_M$, $n_R$) of the first processor unit (63) relating to the refractive index in the measuring arm (M) and/or reference arm (R) and the output signals of a second processor unit (65) relating to the optical path length difference (OPD) which is determined from the interferometer signals ($S_{I1}$-$S_{I4}$) present by the second processor unit (65) are present on the input side, wherein the correction unit (66) is designed to determine an effective refractive index ($n_{eff}$) from the output signals ($n_M$, $n_R$) of the first processor unit (63) relating to the refractive index in the measuring arm (M) and/or reference arm (R) and to process said effective refractive index ($n_{eff}$) in conjunction with the optical path length difference (OPD), and to make available on the output side corrected position signals (GPD) relating to the position of the object to be measured in the measuring arm (M).

6. Interferometer arrangement according to Claim 3 or 4, **characterized in that** the first processor unit (63) is designed to adjust the wavelength ($\lambda_S$) of the spectrometer light source (51; 151; 251; 351; 451) in the range of at least one absorption line of at least one air component ($\varepsilon$) whose absorption characteristic is determined.

7. Interferometer arrangement according to Claim 3 or 4, **characterized in that** the first processor unit (63) is designed to adjust a Fabry-Perot interferometer in the range of at least one absorption line of at least one air component ($\varepsilon$) whose absorption characteristic is determined, wherein the Fabry-Perot interferometer is arranged on the spectrometer detector unit (52; 520).

8. Interferometer arrangement according to Claim 6 or 7, **characterized in that** the first processor unit (63) is designed to regulate a centre wavelength of the adjustment range of the spectrometer light source (51; 151; 251; 351; 451) or to adjust the Fabry-Perot interferometer in such a way that said centre wavelength is at a fixed distance from the absorption maximum of that air component ($\varepsilon$) whose absorption characteristic is determined.

9. Interferometer arrangement according to at least one of Claims 1-8, **characterized in that** the interferometer (10; 100; 1000; 1000') and the spectrometer unit (50; 150; 250; 250'; 45C) have a common light source.

10. Interferometer arrangement according to Claim 1, **characterized in that** optical elements which direct the beam bundle of the spectrometer light source (51; 151; 251; 351; 451) repeatedly along the measuring arm (M) and/or reference arm (R) of the interferometer (10; 100; 1000; 1000') are arranged in the beam path of the spectrometer unit (50; 150; 250; 250'; 450).

11. Interferometer arrangement according to Claim 1, **characterized in that** the wavelength ($\lambda_S$) of the spectrometer light source (51; 151; 251; 351; 451) lies in the range of at least one absorption line of at least one of the following air components ($\varepsilon$) : $N_2$, $O_2$, $CO_2$, $H_2O$.

12. Interferometer arrangement according to Claim 1, **characterized in that** the spectral width of the spectrometer light source (51; 151; 251; 351; 451) is less than or comparable with the spectral width of the absorption line.

13. Interferometer arrangement according to Claim 3 or 4, **characterized in that** the first processor unit (63) forms absorption difference values from the spectrometer signals ($S_{S1}$, $S_{S2}$) which are present on the input side, from the absorption in the centre of the absorption line and the absorption in the outer region of the absorption line, which absorption difference values can then be used to determine the refractive index.

14. Interferometer arrangement according to Claim 1, **characterized in that** the interferometer (10; 100; 1000; 1000') has an interferometer detector unit (20; 120; 2000) with a plurality of interferometer detector elements (25, 26, 28, 29; 125, 126, 128, 129; 2500, 2600, 2800, 2900) for generating a plurality of position signals at various measuring points of the at least one object to be measured, and the spectrometer detector unit (52; 520) also comprises a plurality of spectrometer detector elements (54, 55; 154; 454, 455, 540, 550) for detecting the absorption of the air component ($\varepsilon$) in the associated measuring arms (M) and/or reference arms (R).

15. Interferometer arrangement according to Claim 1, **characterized in that** the spectrometer light source (51; 151; 251; 351; 451) is embodied as a DFB laser or an external cavity laser.

**Revendications**

1. Arrangement interféromètre composé de

   - un interféromètre (10 ; 100 ; 1000 ; 1000') comprenant une source de lumière d'interféromètre (11 ; 111 ; 351) dont le rayonnement émis peut être divisé en un bras de mesure et un bras de référence (M, R), un objet mesuré étant disposé dans le bras de mesure (M) et l'interféromètre (10 ; 100 ; 1000 ; 1000') délivrant des signaux d'interféromètre ($S_{I1}$ - $S_{I4}$) dépendant de la position de l'objet mesuré ainsi que
   - des moyens d'acquisition destinés à acquérir les fluctuations de l'indice de réfraction de l'air dans le bras de mesure et/ou de référence (M, R),

   **caractérisé en ce**
   **que** les moyens d'acquisition comprennent une unité de spectrométrie (50 ; 150 ; 250 ; 250', 450), l'unité de spectrométrie (50 ; 150 ; 250 ; 250', 450) possédant au moins les composants suivants :

   - une source de lumière de spectromètre (51 ; 151 ; 251 ; 351 ; 451) dont le faisceau de rayons émis est superposé aux faisceaux de rayons de la source de lumière d'interféromètre (11 ; 111 ; 351) et la source de lumière de spectromètre (51 ; 151 ; 251 ; 351; 451) émet un rayonnement ayant une longueur d'onde ($\lambda_s$) qui se trouve dans la zone d'une ligne d'absorption d'au moins une composante donnée de l'air ($\varepsilon$),
   - au moins une unité de détection de spectromètre (52 ; 520) destinée à générer des signaux de spectromètre ($S_{S1}$, $S_{S2}$) qui caractérisent l'absorption de la composante de l' air ($\varepsilon$) ou de la longueur d'onde ($\lambda_s$) de la source de lumière de spectromètre dans le bras de mesure et/ou de référence (M, R).

2. Arrangement interféromètre selon la revendication 1, **caractérisé en ce que** les moyens d'acquisition comprennent en outre des moyens de détermination de l'indice de réfraction (64) qui servent à déterminer l'indice de réfraction nominal $n(T_0, p_0, RH_0)$ de l' air dans la zone du bras de mesure et/ou de référence (M, R).

3. Arrangement interféromètre selon la revendication 1, **caractérisé par** une première unité à processeur (63) à l'entrée de laquelle sont appliqués les signaux de spectromètre ($S_{S1}$, $S_{S2}$) de l'unité de spectrométrie (50 ; 150 ; 250 ; 250', 450), l'unité à processeur (PS) étant conçue pour déterminer les fluctuations de l'indice de réfraction de l'air dans le bras de mesure et/ou de référence (M, R) à partir des signaux de spectromètre ($S_{S1}$, $S_{S2}$) appliqués et pour mettre à disposition des signaux de sortie ($n_M$, $n_R$) correspondants de la première unité à processeur (63) en vue de leur traitement postérieur.

4. Arrangement interféromètre selon les revendications 2 et 3, **caractérisé en ce que** les signaux de sortie ($RH_0$, $T_0$, $p_0$) des moyens de détermination de l'indice de réfraction (64) sont en outre appliqués à la première unité à processeur (63) et la première unité à processeur (63) est conçue pour déterminer l'indice de réfraction moyen ($n_M$, $n_R$) dans la zone du bras de mesure et/ou de référence (M, R) à partir des signaux ($S_{S1}$, $S_{32}$ ; $RH_0$, $T_0$, $p_0$) appliqués et pour mettre à disposition des signaux de sortie ($n_M$, $n_R$) correspondants de la première unité à processeur (63) en vue de leur traitement postérieur.

5. Arrangement interféromètre selon la revendication 3 ou 4, **caractérisé par** une unité de correction (66) à l'entrée de laquelle sont appliqués les signaux de sortie ($n_M$, $n_R$) de la première unité à processeur (63) concernant l'indice de réfraction dans le bras de mesure et/ou de référence (M, R) ainsi que les signaux de sortie d'une deuxième unité à processeur (65) concernant à différence de longueur d'onde optique (OPD), laquelle est déterminée par la deuxième unité à processeur (65) à partir des signaux d'interféromètre ($S_{I1}$ - $S_{I4}$) appliqués, l'unité de correction (66) étant conçue pour déterminer une indice de réfraction effectif ($n_{eff}$) à partir des signaux de sortie ($n_M$, $n_R$) de la première unité à processeur (63) concernant l'indice de réfraction dans le bras de mesure et/ou de référence (M, R) et pour traiter celui-ci en association avec la différence de longueur d'onde optique (OPD) et mettre à disposition en sortie des signaux de position corrigés (GDP) concernant la position de l'objet mesuré dans le bras de mesure (M).

6. Arrangement interféromètre selon la revendication 3 ou 4, **caractérisé en ce que** la première unité à processeur (63) est conçue pour ajuster la longueur d'onde ($\lambda_s$) de la source de lumière de spectromètre (51 ; 151 ; 251 ; 351 ; 451) dans la zone d'au moins une ligne d'absorption d'au moins une composante de l'air ($\varepsilon$) dont la caractéristique d'absorption est déterminée.

7. Arrangement interféromètre selon la revendication 3 ou 4, **caractérisé en ce que** la première unité à processeur (63) est conçue pour ajuster un interféromètre de Fabry-Pérot dans la zone d'au moins une ligne d'absorption d'au moins une composante de l'air (ε) dont la caractéristique d'absorption est déterminée, l'interféromètre de Fabry-Pérot étant disposé du côté de l'unité de détection de spectromètre (52 ; 520).

8. Arrangement interféromètre selon la revendication 6 ou 7, **caractérisé en ce que** la première unité à processeur (63) est conçue pour réguler une longueur d'onde centrale de la plage d'ajustement de la source de lumière de spectromètre (51 ; 151 ; 251 ; 351 ; 451), ou pour ajuster l'interféromètre de Fabry-Pérot de telle sorte qu'elle se trouve à un écart fixe du maximum d'absorption de la composante de l'air (ε) dont la caractéristique d'absorption est déterminée.

9. Arrangement interféromètre selon l'une des revendications 1 à 8, **caractérisé en ce que** l'interféromètre (10 ; 100 : 1000 ; 1000') et l'unité de spectrométrie (50 ; 150 ; 250 ; 250', 450) possèdent une source de lumière commune.

10. Arrangement interféromètre selon la revendication 1, **caractérisé en ce que** dans le trajet du rayon de l'unité de spectrométrie (50 ; 150 ; 250 ; 250', 450) sont disposés des éléments optiques qui guident le faisceau de rayons de la source de lumière de spectromètre (51 ; 151 ; 251 ; 351 ; 451) plusieurs fois le long du bras de mesure et/ou de référence (M, R) de l'interféromètre (10 ; 100 ; 1000 ; 1000').

11. Arrangement interféromètre selon la revendication 1, **caractérisé en ce que** la longueur d'onde ($\lambda_s$) de la source de lumière de spectromètre (51 ; 151 ; 251 ; 351 ; 451) se trouve dans la zone d'au moins une ligne d'absorption d'au moins l'une des composantes de l' air (ε) suivantes : $N_2$, $O_2$, $CO_2$ $H_2O$.

12. Arrangement interféromètre selon la revendication 1, **caractérisé en ce que** la largeur spectrale de la source de lumière de spectromètre (51 ; 151 ; 251 ; 351 ; 451) est inférieure ou comparable à la largeur spectrale de la ligne d'absorption.

13. Arrangement interféromètre selon la revendication 3 ou 4, **caractérisé en ce que** la première unité à processeur (63), à partir des signaux de spectromètre ($S_{S1}$, $S_{S2}$) appliqués à l'entrée, forme des valeurs de différence d'absorption entre l'absorption au centre de la ligne d'absorption et l'absorption dans la zone d'extérieure de la ligne d'absorption, lesquelles peuvent ensuite être utilisées pour déterminer l'indice de réfraction.

14. Arrangement interféromètre selon la revendication 1, **caractérisé en ce que** l'interféromètre (10 ; 100 ; 1000 ; 1000') possède une unité de détection d'interféromètre (20 ; 120 ; 2000) comprenant plusieurs éléments de détection d'interféromètre (25, 26, 28, 29 ; 125, 126, 128, 129 ; 2500, 2600, 2800, 2900) en vue de générer plusieurs signaux de position vers différents points de mesure de l'au moins un objet mesuré, et l'unité de détection de spectromètre (52 ; 520) comprend elle aussi plusieurs éléments de détection de spectromètre (54, 55 ; 154 ; 454, 455, 540, 550) destinés à détecter l'absorption de la composante de l'air (ε) dans le bras de mesure et/ou de référence (M, R) associé.

15. Arrangement interféromètre selon la revendication 1, **caractérisé en ce que** la source de lumière de spectromètre (51 ; 151 ; 251 ; 351 ; 451) est réalisée sous la forme d'un laser à rétroaction répartie ou d'un laser à cavité externe.

FIG. 1

# FIG. 2a

# FIG. 2b

FIG. 3a

FIG. 3b

FIG. 4

FIG. 5

FIG. 6

FIG. 7

## IN DER BESCHREIBUNG AUFGEFÜHRTE DOKUMENTE

**In der Beschreibung aufgeführte Patentdokumente**

- US 6501550 B
- US 5404222 A
- US 5764362 A

**In der Beschreibung aufgeführte Nicht-Patentliteratur**

- **VON JENS FLÜGGE.** Vergleichende Untersuchungen zur messtechnischen Leistungsfähigkeit von Laserinterferometern und inkrementellen Maßstabmesssystemen. *RWTH Aachen (D82),* Februar 1996, ISBN 3-89429-683-6, 13-14
- **VON JENS FLÜGGE.** Vergleichende Untersuchungen zur messtechnischen Leistungsfähigkeit von Laserinterferometern und inkrementellen Maßstabmesssystemen. *RWTH Aachen (D82),* Februar 1996, ISBN 3-89429-683-6, 15-16
- **M.E. WEBBER et al.** In situ Combustion Measurements of CO2 Using Diode Laser Sensors Near 2.0 $\mu$m. *American Institute of Aeronautics and Astronautics Paper 2000-0775*
- **CRAIG R. SCHWARZE.** Method for obtaining gas concentration with a phase-based metrology system. *Appl. Optics,* 1998, vol. 37 (18), 3942-3947
- The HITRAN database. 1986
- **L.S. ROTHMAN et al.** *Appl. Opt.,* 1987, vol. 26 (19), 4058-4097
- **T. FERNHOLZ.** Digital phase sensitive detection for in-situ diode-laser spectroscopy under rapidly changing transmission conditions. *Appl. Phys. B,* 2002, vol. 75, 229-236
- **CHR. S. EDWARDS et al.** Development of an IR tunable diode laser absorption spectrometer for trace humidity measurements at atmospheric pressure. *Appl. Optics,* 20. Juli 1999, vol. 38 (21